# EUROPEAN PATENT APPLICATION

(11) **EP 1 925 596 A1**
(43) Date of publication of application: **28.05.2008**
(21) Application number: 06747238.1
(22) Date of filing: 02.06.2006
(51) Int. Cl.: C02F 1/469, B01D 61/44

(54) **ELECTRODIALYZER, WASTE WATER TREATMENT METHOD, AND FLUORINE TREATMENT SYSTEM**

(30) Priority: 09.06.2005 JP 2005169943; 16.06.2005 JP 2005176073
(71) Applicant: EBARA CORPORATION, Ohta-ku, Tokyo 144-8510 (JP)
(72) Inventor: AKAHORI, Masaji, Tokyo 1448510 (JP); NAKAGAWA, Sota, Tokyo 1448510 (JP); SASAKI, Yuji, Tokyo 1448510 (JP)
(74) Representative: Wagner & Geyer
(86) International application number: PCT/JP2006/311562
(87) International publication number: WO 2006/132336

(57) **Abstract**

An electrodialysis apparatus includes an anode chamber (10) having an anode (2), and a cathode chamber (50) having a cathode (3). The electrodialysis apparatus includes a desalting chamber (40) for removing fluoride ions from waste water supplied to produce treated water, a concentrating chamber (30) for concentrating the fluoride ions, which have moved from the desalting chamber (40), in the waste water to produce concentrated water, and a buffer chamber (20) for blocking the fluoride ions in the waste water from flowing from the concentrating chamber (30) directly into the anode chamber (10). The electrodialysis apparatus also include a path for supplying pure water to the anode chamber (10), and a path for supplying effluent water from the anode chamber (10) to the buffer chamber (20).

## Description

### Technical Field

The present invention relates to an electrodialysis apparatus, and more particularly to an electrodialysis apparatus for treatment of liquids containing fluorine, such as (1) waste water, or its pretreated effluent, fromanapparatus relating to the manufacturing of semiconductors, the manufacturing of liquid crystals or the manufacturing of electronic parts, (2) waste water, or its pretreated effluent, produced by cleaning with water or alkaline water of a gas generated by decomposition in a detoxification apparatus of a PFC gas used in the manufacturing of semiconductors, the manufacturing of liquid crystals or the manufacturing of electronic parts, (3) waste water, or its pretreated effluent, produced by cleaning with water or alkaline water of a gas generated by decomposition of chlorofluorocarbon in a chlorofluorocarbon destruction facility by a professional chlorofluorocarbon destroyer, (4) waste water, or its pretreated effluent, from a fluorine recycling apparatus for recovering fluorine in an aqueous solution in the form of calcium fluoride (CaF₂), etc. The present invention also relates to a waste water treatment method that employs such an electrodialysis apparatus. The present invention also relates to a fluorine treatment system for treating fluorine by using such an electrodialysis apparatus.

### Background Art

It is a major problem in various plants to develop a technique which can reduce environmental burden of neutral salt, waste acid or waste alkali contained in waste water discharged as a by-product or waste from various processes, and can recover and reuse an organic component in the by-product or waste. It is, of course, more desirable if the treated water after removal of an environmentally burdensome substance from the waste water becomes reusable in the plant.

For example, a large amount of dilute fluorine-containing waste water at a concentration of several tens to several hundred mg-F/L is produced in a semiconductor, liquid crystal or electronic part manufacturing process. Such dilute fluorine-containing waste water has heretofore been treated by a coagulation sedimentation method using calcium hydroxide (Ca(OH)₂). The coagulation sedimentation method, however, has the problem of the production of a large amount of sludge which is hard to deal with. The production of sludge derived from fluorine increases with an increase in the amount of waste water and, therefore, study has been made of volume reduction of dilute fluorine-containing waste water. No effective concentrating technique, however, has been established as yet. In general, the sludge produced is buried underground without reuse of fluorine, and the treated water is also discharged to the outside because of the high content of Ca in the treated water which makes its reuse difficult.

Because inexpensive industrial water or municipal water is commonly used as cleaning water for an exhaust gas cleaning apparatus, Ca coming from industrial water or municipal water is usually contained in waste water, especially waste water produced upon water cleaning of a gas, generated by decomposition of a PFC gas, in a detoxification apparatus. Ca easily reacts with fluorine to form hardly-soluble calcium fluoride (CaF₂) that will settle out in an aqueous solution, or easily forms its hydroxide and precipitates in an alkaline aqueous solution. This makes it difficult to separate or concentrate fluorine contained in the waste water.

Ordinary water treatment techniques, which are used for concentration of an aqueous solution, are known to cause problems when applied to treatment of fluorine-containing waste water. For example,when concentratingfluorine-containing waste water by a treatment using a RO film, because of high film permeability of hydrogen fluoride (HF), a considerable amount of HF leaks to the permeated water side, thus making efficient concentration impossible and causing the problem of high fluorine concentration in the treated water.

An evaporation concentration methodisan effective method for further concentrating concentrated waste water having a concentration of not less than 10,000 mg/L. However, it is difficult to apply the method to dilute waste water because of large energy consumption involved in the evaporation of water. In addition, because of carrying over of fluoride ions into the distilled water, the distilled water has high fluorine content and thus is difficult to reuse as it is.

In contrast to these methods, an electrodialysis is an excellent method to concentrate or desalt waste water having an ion concentration of about 1,000 mg/L to 10,000 mg/L, and is in practical use for the production of drinking water from brine, recovery of an acid, concentration of a salt, etc. Electrodialysis, however, is incapable of a high level of desalting, leaving a considerable amount of ions in the treated water. Thus, the use of electrodialysis in waste water treatment may require a secondary treatment of the treated water.

Further, when using electrodialysis in a treatment of waste acid containing a metal ion that will form a metal hydroxide, it is necessary to take measures to prevent the formation of the metal hydroxide in an electrodialysis cell. In the case where electrodialysis is used for treating fluorine-containing waste water, there is the problem of corrosion by fluorine of an electrode of an electrodialysis cell.

Fluoride ion is subject to the effluent regulation in Japan as a harmful material that can injure human health and, according to the uniform effluent standard, the maximum permissible fluorine concentration is 8 mg/L for effluent to be discharged into public waters other than marine waters and 15 mg/L for effluent to be discharged into marine waters. Further, the Japan' s environmental standard for the protection of human health prescribes the maximum permissible fluorine concentration of 0.8 mg/L. It is desirable to make the fluorine concentration of treated water after treatment of fluorine-containing waste water not only meet the uniform effluent standard but bring it as close to the environmental standard as possible.

When the fluorine concentration in treated water is brought close to the environmental standard in treatment of fluorine-containing waste water by using the coagulation sedimentation method, the amount of chemicals necessary for coagulation sedimentation increases rapidly, leading to a significant increase in the production of sludge.

When removing fluorine from fluorine-containing waste water to reuse the treated water, e.g., as raw water for the production of pure water, the fluorine concentration in the treated water is desirably as low as possible, preferably not more than 1 mg/L. This is because when the treated water, having a fluorine concentration of more than 1 mg/L, is mixed with Ca-containingwater, such as groundwater or tap water, to prepare raw water for the production of pure water, calcium fluoride may be produced upon a separation/concentrating operation in a process for the production of pure water, and the compound could block the pure water production apparatus.

The following are conventional techniques for treating fluorine-containing waste water, etc. by using electrodialysis technology.

Japanese Patent Laid-Open Publication No. S54-20196 discloses an electrodialysis treatment method for desalting and concentrating an aqueous electrolyte solution containing fluoride ions (F⁻) and calcium ions (Ca²⁺) in an electrodialysis cell using a cation exchange membrane and an anion exchange membrane. In this method, the electrodialysis cell includes desalting chambers and concentrating chambers disposed alternately, and is operated at a current density which is not more than one-half of the critical current density. Fluoride ions, which less pass through an anion exchange membrane than other anion ions, are left in the desalting chambers during the treatment, thereby suppressing precipitation of CaF₂ scale in the concentrating chambers for desalting.

Japanese Patent No. 2726657 discloses a method for recovering a mixed acid from an aqueous solution of a mixed salt (waste of stainless steel-cleaning acid) containing at least two different types of anion ions including fluoride ion and at least two types of salts by means of a three-chamber electrodialytic water dissociation apparatus that employs a known bipolar membrane. In this method, an alkaline solution (preferably KOH) is added to waste water containing heavy metal ions to precipitate the heavy metal in advance, and the resulting suspension is passed through a filtration unit to filter out the precipitate, thereby obtaining a solution of a soluble mixed salt. The solution of the soluble mixed salt is then supplied to a desalting chamber of the electrodialytic water dissociation apparatus to recover the mixed salt.

Japanese Patent Publication No. 7-112558 discloses a method for regenerating nitric acid/hydrofluoric acid waste water containing metal ions. In this method, in order to increase the efficiency of recovery of nitric acid in electrodialysis operation, hydrofluoric acid is added to the nitric acid/hydrofluoric acid waste water containing metal ions to increase the F⁻/NO³⁻ molar ratio in the waste water, and the waste water is then subjected to dialytic deacidification (recovery of nitric acid) using an ion-exchange membrane electrodialysis cell for acid recovery. Next, metal ions contained in the treated water are precipitated and removed in the form of hydroxide by adding an alkali to the treated water. Thereafter, nitric acid/hydrofluoric acid and an alkali are separated and recovered from the treated water by an ion-exchange membrane electrodialysis apparatus using a combination of bipolar membrane and anion exchange membrane/cation exchange membrane.

Japanese Patent Publication No. H7-112559 discloses a method for treating alkaline fluoride waste water containing metal ions and oils. In this method, the alkaline fluoride waste water containing metal ions and oils is neutralized by adding hydrofluoric acid thereto, and the waste water is subjected to an oil removal treatment and then to a metal ion adsorption/removal treatment with a chelating resin. Thereafter, an alkali and hydrofluoric acid are separated and recovered from the treated water by an ion-exchange membrane electrodialysis apparatus using a combination of bipolar membrane and anion exchange membrane/cation exchange membrane.

Japanese Patent No. 3364308 discloses a method for treating fluorine-containing waste water. In this method, fluorine is removed from fluorine-containing waste water by means of a fluorine adsorbent to produce treated water. In addition, a fluorine-containing eluate from the fluorine adsorbent is subjected to electrodialysis to separate the eluate into fluorine-rich water and fluorine-poor water, and fluorine is removed from the fluorine-poor water by means of a fluorine adsorbent to produce treated water.

Japanese Patent Laid-Open publication No. H9-262588 discloses a method comprising separating fluorine from an aqueous solution containing fluorine and ammonia, such as a BHF solution, mainly discharged from a semiconductor factory, and reacting the fluorine obtained with calcium carbonate to recover fluorine. In this method, treatment of waste water containing fluorine and ammonium is carried out by using an electrodialysis cell having anion exchange membranes and cation exchange membranes arranged alternately, and supplying the waste water and a mineral acid alternately to the chambers. Fluoride ions are recovered as a fluorine-concentrated solution having a concentration suited for treatment with calcium carbonate particles, while ammonium ions are recovered in the form of mineral acid salt. The concentration of fluoride ions and the concentration of ammonium ions in the treated water are both lowered to 50 to 100 mg/L so that the treated water can be subjected to a secondary treatment, such as resin adsorption.

Japanese Patent No. 3555732 discloses a method for treating dilute acidic waste water containing hydrofluoric acid and a mineral acid, produced in a semiconductor device manufacturing process, using an electrical deionization apparatus. In this method, an alkali is added to dilute acidic waste water containing hydrofluoric acid and a mineral acid to lower the pH to a value at which hydrofluoric acid, which is a weak electrolyte, dissociates, and the waste water is treated in an electrical deionization apparatus (EDI) having a desalting chamber filled with an ion exchanger, such as an ion exchange resin or ion exchange fibers, and a concentrating chamber partitioned by an ion exchange membrane, thereby obtaining treated water from which hydrofluoric acid has been removed. Salt-concentrated water is also obtained.

Japanese Patent Laid-Open Publication No. 2000-176457 discloses a waste water treatment apparatus for treating waste water produced during the manufacturing of semiconductors in a semiconductor manufacturing factory. In this waste water treatment apparatus, fluorine in waste water produced during the manufacturing of semiconductors is recovered in the form of hydrogen fluoride using an electrodialysis apparatus having a waste water chamber filled with an ion exchange resin. Metal ions are recovered in a cathode chamber. The F⁻ component of the waste water, which has moved from the waste water chamber through a cation exchange membrane into an acid recovery chamber, is retained in the acid recovery chamber by a cation exchange membrane, and hardly reaches an anode chamber. The metal ion component moves from the waste water chamber through a cation exchange membrane into a cathode chamber. The metal deposited on a cathode electrode is re-ionized by reversing the polarity of the electrode for a short period, and the metal ions are moved to a cathode side electrode liquid tank where the metal ions are concentrated and precipitated in the form of hydroxide. The metal component is also recovered in this manner.

Japanese Patent Laid-Open Publication No. 2000-229289 discloses a method for treating fluorine-containing water by an electrical desalting apparatus. In this method, the relationship between the concentration product of the calcium concentration and the fluorine concentration of water, supplied to the electrical desalting apparatus, and the water recovery rate of the electrical desalting apparatus is restricted, thereby preventing the formation of calcium fluoride scale in a concentrating chamber.

Japanese Patent Laid-Open Publication No. 2001-121152 discloses an electrodialysis apparatus for recovering and reusing dilute acidic waste water containing hydrofluoric acid. In this apparatus, cation exchange membranes and anion exchange membranes are arranged, at least partly alternately, between positive and negative electrodes, whereby desalting chambers and concentrating chambers are formed. At least the desalting chambers and the electrode chambers are filled with an ion exchanger. The treated water from the desalting chambers, having a lowered content of hydrofluoric acid, is supplied to the electrode chambers, so that desalting treatment can be carried out without corrosion of the electrodes. This patent document also describes returning the used electrode liquid to a raw water tank and mixing the liquid with the water to be treated.

Japanese Patent Laid-Open Publication No. 2001-145819 discloses a waste gas treatment method for detoxifying a toxic gas. In this method, an acidic gas containing hydrogen fluoride is subjected to gas/liquid contact and decomposition absorption with an (aqueous alkaline) absorbing solution and a wet scrubber, and the resulting waste water is sent to an electrodialysis apparatus, having an anion-selective permeable membrane, for dialytic treatment of the waste water. Part or the whole of the absorbed anion ions is discharged out of the system, and the resulting (aqueous alkaline) treated solution is resent as an absorbing solution to the wet scrubber and circulated.

Japanese Patent Laid-Open Publication No. 2002-119974 discloses a method for deionizing fluoride ion-containing water by an electrical regenerative deionization apparatus to produce pure water. In this method, concentrated water in an electrical regenerative desalting apparatus is treated with an anion exchange resin to prepare water having a fluoride ion concentration of not more than 1 mg/L, water having an electric conductivity of not less than 10 µS/cm by adding an aqueous salt solution as needed, or water which makes the pH at the entrance to an anode chamber not less than 8, and the water is sent as an electrode liquid to electrode chambers so as to prevent corrosion of the electrodes.

Japanese Patent Laid-Open Publication No. 2003-126863 discloses an apparatus which can deionize raw water by an electrical deionization apparatus without corrosion of electrodes even when the raw water is one containing a highly corrosive ion, such as fluoride ion. According to this apparatus, corrosion of electrodes can be prevented by using an anode plate and a cathode plate which each comprise a boron-doped CVD diamond thin film deposited on a surface of a conductive substrate.

Japanese Patent Laid-Open Publication No. 2003-159593 discloses a method for treating waste water containing a metal and fluoride ions, such as waste water after cleaning of a stainless steel with an acid. In this method, waste water containing a metal and fluoride ions is first neutralized with an alkaline solution, and then filtered to separate the waste water into a metal hydroxide sludge containing no fluoride ion and a neutralized solution containing fluoride ions. The neutralized solution containing fluoride ions is subjected to acid/alkali separation by bipolar-membrane electrodialysis to separate the solution into a fluoride ion-containing acidic solution and an alkaline solution. The fluoride ion-containing acidic solution is then separated into a fluoride ion-concentrated solution and a dilute acidic solution by means of a multistage steam refining column. This patent document teaches that the fluoride ion concentration of the fluoride ion-containing acidic solution, which has undergone the acid/alkali separation in a bipolar-membrane electrodialysis apparatus, is for example 20 g/L (2%), and that the fluoride ion concentration of the fluoride ion-concentrated solution, which has been concentrated in the multistage steam refining column and is reusable, is about 130 g/L (13%).

Japanese Patent Laid-Open Publication No. 2004-174439 discloses a method for treating fluorine-containing waste water. This method comprises an electrodialysis process for desalting and concentrating fluorine-containing waste water. The electrodialysis is carried out to such an extent that the resulting desalted water can be reused as replenishing water for the source of the fluorine-containing waste water and the resulting hydrofluoric acid-concentrated solution has a reusable concentration. The electrodialysis is carried out by using an electrodialysis means including a negative electrode section and a positive electrode section disposed opposite to each other. Cation exchange membranes and anion exchange membranes are disposed alternately in the negative electrode section and in the central portion of the electrodialysis means, and cation exchange membranes are disposed successively in the vicinity of the positive electrode section. The desalted water is supplied to the negative electrode section and the positive electrode section and also to the area, in the vicinity of the positive electrode section, where the cation exchange membranes are disposed (blocking chamber), thereby controlling the hydrogen fluoride concentration of the circulating electrode liquid and the blocking liquid at a low level and preventing corrosion of the positive electrode. The multiplication of concentration of the hydrofluoric acid-concentrated solution is increased by allowing the solution to circulate. Further, the fluoride ion concentration and/or the electrolyte concentration in the hydrofluoric acid-concentrated solution is measured, and the multiplication of concentration of the solution is controlled based on a change in the measured concentration.

The above-mentioned conventional electrodialysis apparatuses have the following problems: Because of the high fluorine permeability of an ion exchange membrane, fluoride ions will move into an electrode chamber and corrode the electrode, making it impossible to continue stable operation. When treating calcium-containing waste water of dilute hydrofluoric acid, calcium fluoride will precipitate in a concentration chamber, making it impossible to continue stable operation. It is difficult to regenerate fluorine-containing waste water containing ammonium ions so as to recycle fluorine. In addition, it has not been possible with the conventional electrodialysis apparatuses to obtain, from dilute fluorine-containing waste water, reusable treated water having a fluorine concentration of less than 1 mg/L and, at the same time, increase the fluorine concentration of concentrated water to such a degree that it can be supplied to a fluorine recycling apparatus.

The method described in Japanese Patent Laid-Open PublicationNo. S54-20196 has aproblemthat fluoride ions remain in the treated water, necessitating treatment of the remaining fluoride. Further, this patent document teaches nothing as to how to avoid corrosion of electrodes by fluorine.

In the method described in Japanese Patent No. 2726657, the waste water containing a mixed salt is pretreated with an alkali to precipitate and remove heavy metal ions in the form of hydroxide, thereby preventing the formation of hydroxide in an electrodialysis cell. This method needs to use a sedimentation apparatus and a filtration apparatus, leading to a larger-sized overall apparatus and a more complicated operation. Furthermore, this method is intended to recover an acid from a concentrated stainless steel-cleaning acid solution. Therefore, a large amount of fluorine still remains in the treated water, and thus the treated water can in no way be reused as it is. The method described in Japanese Patent Publication No. H7-112559 has similar problems to those of Japanese Patent No. 2726657.

The method described in Japanese Patent Publication No. H7-112559 is directed to special waste water, alkaline fluoride waste water containing oils, produced in an organic chemical plant. In this method, after the neutralization of the waste water with hydrofluoric acid added and the removal of oils, metal ions are removed with a chelating resin. Thereafter, hydrofluoric acid and an alkali are recovered by an electrodialysis apparatus using a bipolar membrane method. This patent document does not disclose a method to avoid corrosion of electrodes by fluorine.

In the method described in Japanese Patent No. 3364308, a fluorine-containing eluate from a fluorine adsorbent is subjected to electrodialysis to separate the eluate into fluorine-rich water and fluorine-poor water, and fluorine is removed from the fluorine-poor water by the fluorine adsorbent to produce treated water. The method has the problem of poor treatment efficiency due to the fact that fluoride ions partly circulate between the adsorbent and the electrodialysis cell. This patent document does not disclose a method to avoid corrosion of electrodes by fluorine.

In the method described in Japanese Patent Laid-Open publication No. H9-262588, by treatment of waste water using the disclosed electrodialysis cell, fluoride ions are recovered as a fluorine-concentrated solution having a concentration suited for treatment with calcium carbonate particles, while decreasing ammonium ions concentration. The treated water cannot be reused as it is because of high fluorine concentration, and therefore needs to undergo a secondary treatment with a resin. This patent document does not disclose a method to avoid corrosion of electrodes by fluorine.

In the method described in Japanese Patent No. 3555732, mixed acidic water containing hydrofluoric acid, after addition of an alkali thereto, is treated in an electrical deionization apparatus to obtain treated water from which hydrofluoric acid has been removed. Fluorine is concentrated in the form of its salt, which is not suited for recovery or reuse of hydrofluoric acid or fluorine. Further, because concentrated water is supplied to electrode chambers, corrosion of the electrodes by fluorine is inevitable.

In the apparatus described in Japanese Patent Laid-Open Publication No. 2000-229289, when the polarity of the cathode is reversed in order to dissolve the metal deposited on it, the same amount of current as needed for the deposition must be applied to dissolve the metal. Further, fluoride ions and metal ions will leak to the treated water, which necessitates a secondary treatment of the treated water.

With reference to the method described in Japanese Patent Laid-Open Publication No. 2000-229289, because of narrow operable concentration ranges for calcium and fluorine, it is necessary to carry out pretreatment of fluorine-containing water with an ion exchange resin to remove fluoride ions or calcium ions, which will form scales, in advance. Further, this patent document does not disclose a method to avoid corrosion of electrodes.

The apparatus described in Japanese Patent Laid-Open Publication No. 2001-121152 is not provided with a buffer chamber. Accordingly, leakage of fluorine from a concentrating chamber into an electrode chamber may occur when the fluorine concentration in the concentrating chamber is increased to a certain high level. It becomes necessary in this case to increase the flow rate of treated water from an electrical desalting apparatus to the electrode chamber so as to decrease the fluorine concentration in the electrode chamber. Thus, it is impracticable to recover fluorine with a high level of fluorine concentration in the concentrating chamber. Further, the apparatus is not applicable to treatment of dilute acidic waste water which contains Ca ions, because in this case both Ca ions and fluoride ions are concentrated in the concentrating chamber, precipitating CaF₂.

The method described in Japanese Patent Laid-Open Publication No. 2002-119974 needs to carry out the troublesome operations of the removal of fluorine from the electrode solution with an anion exchange resin to control the fluorine concentration, the addition of an aqueous salt solution to maintain a high electric conductivity of the electrode solution, etc.

The apparatus described in Japanese Patent Laid-Open Publication No. 2003-126863 has the problem of the need of a costly large CVD apparatus for the production of the electrodes.

The method described in Japanese Patent Laid-Open Publication No. 2003-159593 needs to carry out pretreatment of waste water with an alkali to separate metal ions from the waste water. This patent document does not disclose a method to avoid corrosion of the electrodes of the bipolar membrane electrodialysis apparatus.

The method described in Japanese Patent Laid-Open Publication No. 2004-174439 is intended to prevent corrosion of electrodes by introducing desalted water, which has undergone an electrolytic treatment, into the blocking chamber and the electrode chambers. This method, however, involves the problem of high operating voltage because no countermeasure is taken to prevent a rise in operating voltage due to the supply of the desalted water. Further, fluorine will leak from the concentrating chamber, containing a fluorine-containing solution having a high fluorine concentration, into the adjacent blocking chamber. The circulating water in the blocking chamber willthusbecomefluorine-containing water, making it necessary to carry out post-treatment of the water to remove or recover fluorine from the water. In addition, the fluorine concentrations of the circulating electrode liquid and the blocking liquid depend on the quality of the desalted water. Thus, when the fluorine concentration of the desalted water rises, due to the operating conditions, such as applied current, or to a change in the quality of the raw water, there is a fear of corrosion of the electrodes.

With the problems described above, there has been a demand for a technique which can treat fluorine-containing waste water efficiently and stably. There has also been a demand for a technique which can concentrate fluorine from fluorine-containing waste water for reuse of the fluorine and, at the same time, can remove fluorine from the waste water to such an extent as to enable reuse of the treated water.

### Disclosure of Invention

The present invention has been made in view of the above situation in the prior art. It is therefore a first object of the present invention to provide an electrodialysis apparatus which can stably electrodialyze fluorine-containing waste water without corrosion of an electrode.

It is a second object of the present invention to provide an electrodialysis apparatus which can electrodialyze fluorine-containing waste water in such a manner that the treated water has a low fluorine concentration of less than 1mg/L and the treated water can be reused.

It is a third object of the present invention to provide an electrodialysis apparatus which can electrodialyze fluorine-containing waste water containing ammonium ions to obtain fluorine-concentrated water from which ammonium ions have been separated.

It is a fourth object of the present invention to provide an electrodialysis apparatus which, when electrodialyzing fluorine-containing waste water containing metal ions capable of forming a metal hydroxide sludge, can obtain fluorine-concentrated water from which metal ions have been separated, without the formation of a metal hydroxide sludge.

It is a fifth object of the present invention to provide an electrodialysis apparatus which can electrodialyze fluorine-containing waste water to obtain fluorine-concentrated water which can be supplied to a fluorine recycling apparatus to recover fluorine as calcium fluoride (CaF₂).

It is a sixth object of the present invention to provide an electrodialysis apparatus which can electrodialyze fluorine-containing waste water containing ammonium ions to obtain fluorine-concentrated water from which ammonium ions have been separated so as to facilitate recycling of fluorine and which can be supplied to a fluorine recycling apparatus to recover fluorine as calcium fluoride (CaF₂).

Further, it is a seventh object of the present invention to provide a fluorine treatment system which enables effective fluorine treatment by the use of such an electrodialysis apparatus.

According to the first aspect of the present invention, there is provided an electrodialysis apparatus including an anode chamber having an anode and a cathode chamber having a cathode. The electrodialysis apparatus is provided with a desalting chamber for removing target ions from water to be treated supplied to produce treated water having a lowered concentration of the target ions, and a concentrating chamber for concentrating the target ions, which have moved from the desalting chamber, in the water to be treated to produce concentrated water having an increased concentration of the target ions. The electrodialysis apparatus also includes a path for supplying pure water to the anode chamber, and a path for supplying at least part of effluent water from the anode chamber to the concentrating chamber.

According to the second aspect of the present invention, there is provided an electrodialysis apparatus including an anode chamber having an anode and a cathode chamber having a cathode. The electrodialysis apparatus is provided with a desalting chamber for removing target ions from water to be treated supplied to produce treated water having a lowered concentration of the target ions, a concentrating chamber for concentrating the target ions, which have moved from the desalting chamber, in the water to be treated to produce concentrated water having an increased concentration of the target ions, and a buffer chamber for blocking the target ions in the water to be treated from flowing from the concentrating chamber directly into the anode chamber. The electrodialysis apparatus also includes a path for supplying pure water to the anode chamber, and a path for supplying at least part of effluent water from the anode chamber to the concentrating chamber.

According to the third aspect of the present invention, there is provided an electrodialysis apparatus including an anode chamber having an anode and a cathode chamber having a cathode. The electrodialysis apparatus is provided with a desalting chamber for removing target ions from water to be treated supplied to produce treated water having a lowered concentration of the target ions, a concentrating chamber for concentrating the target ions, which have moved from the desalting chamber, in the water to be treated to produce concentrated water having an increased concentration of the target ions, a buffer chamber for blocking the target ions in the water to be treated from flowing from the concentrating chamber directly into the anode chamber. The electrodialysis apparatus also includes a path for supplying pure water to the anode chamber, and a path for supplying at least part of effluent water from the anode chamber to the buffer chamber.

According to the fourth aspect of the present invention, there is provided an electrodialysis apparatus including an anode chamber having an anode and a cathode chamber having a cathode. The electrodialysis apparatus is provided with a desalting chamber for removing target ions from water to be treated supplied to produce treated water having a lowered concentration of the target ions, a concentrating chamber for concentrating the target ions, which have moved from the desalting chamber, in the water to be treated to produce concentrated water having an increased concentration of the target ions, and a buffer chamber for blocking the target ions in the water to be treated from flowing from the concentrating chamber directly into the anode chamber. The electrodialysis apparatus also includes a path for supplying pure water to the anode chamber, and a path for supplying at least part of effluent water from the anode chamber to the concentrating chamber via the buffer chamber.

According to the fifth aspect of the present invention, there is provided an electrodialysis apparatus including an anode chamber having an anode and a cathode chamber having a cathode. The electrodialysis apparatus is provided with a desalting chamber for removing first target ions and second target ions from water to be treated supplied to produce treated water having a lowered concentration of the first target ions and a lowered concentration of the second target ions, a first concentrating chamber for concentrating the first target ions, which have moved from the desalting chamber, in the water to be treated to produce first concentrated water having an increased concentration of the first target ions, a second concentrating chamber for concentrating the second target ions, which have moved from the desalting chamber, in the water to be treated to produce second concentrated water having an increased concentration of the second target ions, and an ion supply chamber for supplying ions, having the opposite polarity to that of the second target ions in the water to be treated, to the second concentrating chamber. The electrodialysis apparatus also includes a path for supplying pure water to the anode chamber, and a path for supplying at least part of effluent water from the anode chamber to the first concentrating chamber.

According to the sixth aspect of the present invention, there is provided an electrodialysis apparatus including an anode chamber having an anode and a cathode chamber having a cathode. The electrodialysis apparatus is provided with a desalting chamber for removing first target ions and second target ions from water to be treated supplied to produce treated water having a lowered concentration of the first target ions and a lowered concentration of the second target ions, a first concentrating chamber for concentrating the first target ions, which have moved from the desalting chamber, in the water to be treated to produce first concentrated water having an increased concentration of the first target ions, and a buffer chamber for blocking the first target ions in the water to be treated from flowing from the first concentrating chamber directly into the anode chamber. The electrodialysis apparatus also includes a second concentrating chamber for concentrating the second target ions, which have moved from the desalting chamber, in the water to be treated to produce second concentrated water having an increased concentration of the second target ions, and an ion supply chamber for supplying ions, having the opposite polarity to that of the second target ions in the water to be treated, to the second concentrating chamber. The electrodialysis apparatus further includes a path for supplying pure water to the anode chamber, and a path for supplying at least part of effluent water from the anode chamber to the buffer chamber.

According to the seventh aspect of the present invention, there is provided an electrodialysis apparatus including an anode chamber having an anode and a cathode chamber having a cathode. The electrodialysis apparatus is provided with a desalting chamber for removing first target ions and second target ions from water to be treated supplied to produce treated water having a lowered concentration of the first target ions and a lowered concentration of the second target ions, a first concentrating chamber for concentrating the first target ions, which have moved from the desalting chamber, in the water to be treated to produce first concentrated water having an increased concentration of the first target ions, and a buffer chamber for blocking the first target ions in the water to be treated from flowing from the first concentrating chamber directly into the anode chamber. The electrodialysis apparatus also includes a second concentrating chamber for concentrating the second target ions, which have moved from the desalting chamber, in the water to be treated to produce second concentrated water having an increased concentration of the second target ions, and an ion supply chamber for supplying ions, having the opposite polarity to that of the second target ions in the water to be treated, to the second concentrating chamber. The electrodialysis apparatus further includes a path for supplying pure water to the anode chamber, and a path for supplying at least part of effluent water from the anode chamber to the first concentrating chamber.

According to the eighth aspect of the present invention, there is provided an electrodialysis apparatus including an anode chamber having an anode and a cathode chamber having a cathode. The electrodialysis apparatus is provided with a desalting chamber for removing first target ions and second target ions from water to be treated supplied to produce treated water having a lowered concentration of the first target ions and a lowered concentration of the second target ions, a first concentrating chamber for concentrating the first target ions, which have moved from the desalting chamber, in the water to be treated to produce first concentrated water having an increased concentration of the first target ions, and a buffer chamber for blocking the first target ions in the water to be treated from flowing from the first concentrating chamber directly into the anode chamber. The electrodialysis apparatus also includes a second concentrating chamber for concentrating the second target ions, which have moved from the desalting chamber, in the water to be treated to produce second concentrated water having an increased concentration of the second target ions, and an ion supply chamber for supplying ions, having the opposite polarity to that of the second target ions in the water to be treated, to the second concentrating chamber. The electrodialysis apparatus further includes a path for supplying pure water to the anode chamber, and a path for supplying at least part of effluent water from the anode chamber to the first concentrating chamber via the buffer chamber.

According to the ninth aspect of the present invention, there is provided an electrodialysis apparatus including an anode chamber having an anode and a cathode chamber having a cathode. The electrodialysis apparatus is provided with a desalting chamber for removing first target ions and second target ions from water to be treated supplied to produce treated water having a lowered concentration of the first target ions and a lowered concentration of the second target ions, a first concentrating chamber for concentrating the first target ions, which have moved from the desalting chamber, in the water to be treated to produce first concentrated water having an increased concentration of the first target ions, and a second concentrating chamber for concentrating the second target ions, which have moved from the desalting chamber, in the water to be treated to produce second concentrated water having an increased concentration of the second target ions. The electrodialysis apparatus also includes a path for supplying pure water to the anode chamber, and a path for supplying at least part of effluent water from the anode chamber to the first concentrating chamber.

According to the tenth aspect of the present invention, there is provided an electrodialysis apparatus including an anode chamber having an anode and a cathode chamber having a cathode. The electrodialysis apparatus is provided with a desalting chamber for removing first target ions and second target ions from water to be treated supplied to produce treated water having a lowered concentration of the first target ions and a lowered concentration of the second target ions, a first concentrating chamber for concentrating the first target ions, which have moved from the desalting chamber, in the water to be treated to produce first concentrated water having an increased concentration of the first target ions, a buffer chamber for blocking the first target ions in the water to be treated from flowing from the first concentrating chamber directly into the anode chamber, and a second concentrating chamber for concentrating the second target ions, which have moved from the desalting chamber, in the water to be treated to produce second concentrated water having an increased concentration of the second target ions. The electrodialysis apparatus also includes a path for supplying pure water to the anode chamber, and a path for supplying at least part of effluent water from the anode chamber to the buffer chamber.

According to the eleventh aspect of the present invention, there is provided an electrodialysis apparatus including an anode chamber having an anode and a cathode chamber having a cathode. The electrodialysis apparatus is provided with a desalting chamber for removing first target ions and second target ions from water to be treated supplied to produce treated water having a lowered concentration of the first target ions and a lowered concentration of the second target ions, a first concentrating chamber for concentrating the first target ions, which have moved from the desalting chamber, in the water to be treated to produce first concentrated water having an increased concentration of the first target ions, a buffer chamber for blocking the first target ions in the water to be treated from flowing from the first concentrating chamber directly into the anode chamber, and a second concentrating chamber for concentrating the second target ions, which have moved from the desalting chamber, in the water to be treated to produce second concentrated water having an increased concentration of the second target ions. The electrodialysis apparatus also provides a path for supplying pure water to the anode chamber, and a path for supplying at least part of effluent water from the anode chamber to the first concentrating chamber.

According to the twelfth aspect of the present invention, there is provided an electrodialysis apparatus including an anode chamber having an anode and a cathode chamber having a cathode. The electrodialysis apparatus is provided with a desalting chamber for removing first target ions and second target ions from water to be treated supplied to produce treated water having a lowered concentration of the first target ions and a lowered concentration of the second target ions, a first concentrating chamber for concentrating the first target ions, which have moved from the desalting chamber, in the water to be treated to produce first concentrated water having an increased concentration of the first target ions, a buffer chamber for blocking the first target ions in the water to be treated from flowing from the first concentrating chamber directly into the anode chamber, and a second concentrating chamber for concentrating the second target ions, which have moved from the desalting chamber, in the water to be treated to produce second concentrated water having an increased concentration of the second target ions. The electrodialysis apparatus also includes a path for supplying pure water to the anode chamber, and a path for supplying at least part of effluent water from the anode chamber to the first concentrating chamber via the buffer chamber.

According to the thirteenth aspect of the present invention, there is provided an electrodialysis apparatus including an anode chamber having an anode and a cathode chamber having a cathode. The electrodialysis apparatus is provided with a desalting chamber for removing target ions from water to be treated supplied to produce treated water having a lowered concentration of the target ions, a concentrating chamber for concentrating the target ions, which have moved from the desalting chamber, in the water to be treated to produce concentrated water having an increased concentration of the target ions, and a buffer chamber for blocking the target ions in the water to be treated from flowing from the concentrating chamber directly into the anode chamber. The electrodialysis apparatus also includes a path for supplying pure water to the buffer chamber, and a path for supplying at least part of effluent water from the buffer chamber to the concentrating chamber.

The electrodialysis apparatus may further comprise a path for mixing at least part of the effluent water from the buffer chamber with the water to be treated or the treated water.

According to the fourteenth aspect of the present invention, there is provided an electrodialysis apparatus including an anode chamber having an anode and a cathode chamber having a cathode. The electrodialysis apparatus is provided with a desalting chamber for removing first target ions and second target ions from water to be treated supplied to produce treated water having a lowered concentration of the first target ions and a lowered concentration of the second target ions, a first concentrating chamber for concentrating the first target ions, which have moved from the desalting chamber, in the water to be treated to produce first concentrated water having an increased concentration of the first target ions, and a buffer chamber for blocking the first target ions in the water to be treated from flowing from the first concentrating chamber directly into the anode chamber. The electrodialysis apparatus also includes a second concentrating chamber for concentrating the second target ions, which have moved from the desalting chamber, in the water to be treated to produce second concentrated water having an increased concentration of the second target ions. The electrodialysis apparatus further includes a first cation exchange membrane provided between the anode chamber and the buffer chamber, a first anion exchange membrane provided between the cathode chamber and the second concentrating chamber, a second cation exchange membrane provided between the buffer chamber and the first concentrating chamber, a second anion exchange membrane provided between the first concentrating chamber and the desalting chamber, and a third cation exchange membrane provided between the desalting chamber and the second concentrating chamber.

According to the fifteenth aspect of the present invention, there is provided an electrodialysis apparatus including an anode chamber having an anode and a cathode chamber having a cathode. The electrodialysis apparatus is provided with a desalting chamber for removing first target ions and second target ions from water to be treated supplied to produce treated water having a lowered concentration of the first target ions and a lowered concentration of the second target ions, a first concentrating chamber for concentrating the first target ions, which have moved from the desalting chamber, in the water to be treated to produce first concentrated water having an increased concentration of the first target ions, and a buffer chamber for blocking the first target ions in the water to be treated from flowing from the first concentrating chamber directly into the anode chamber. The electrodialysis apparatus also includes a second concentrating chamber for concentrating the second target ions, which have moved from the desalting chamber, in the water to be treated to produce second concentrated water having an increased concentration of the second target ions, and an ion supply chamber for supplying ions, having the opposite polarity to that of the second target ions in the water to be treated, to the second concentrating chamber. The electrodialysis apparatus further includes a first cation exchange membrane provided between the anode chamber and the buffer chamber, a first anion exchange membrane providedbetween the cathode chamber and the ion supply chamber, a second cation exchange membrane provided between the buffer chamber and the first concentrating chamber, a second anion exchange membrane provided between the first concentrating chamber and the desalting chamber, a third cation exchange membrane provided between the desalting chamber and the second concentrating chamber, and a third anion exchange membrane provided between the second concentrating chamber and the ion supply chamber.

According to the sixteenth aspect of the present invention, there is provided an electrodialysis apparatus including an anode chamber having an anode and a cathode chamber having a cathode. The electrodialysis apparatus is provided with a plurality of chamber structures each comprised of a plurality of chambers, at least one bipolar electrode chamber having an electrode, a first cation exchange membrane provided between the anode chamber and the chamber structures, a first anion exchange membrane provided between the cathode chamber and the chamber structures, a second anion exchange membrane provided on the anode side of the bipolar electrode chamber, and a second cation exchange membrane provided on the cathode side of the bipolar electrode chamber. The bipolar electrode chamber is disposed between the chamber structures and filled with an ion exchanger. The chamber structure include a desalting chamber for removing first target ions and second target ions from water to be treated supplied to produce treated water having a lowered concentration of the first target ions and a lowered concentration of the second target ions, a first concentrating chamber for concentrating the first target ions, which have moved from the desalting chamber, in the water to be treated to produce first concentrated water having an increased concentration of the first target ions, and a buffer chamber for blocking the first target ions in the water to be treated from flowing from the first concentrating chamber directly into the anode chamber. The chamber structure also includes a second concentrating chamber for concentrating the second target ions, which have moved from the desalting chamber, in the water to be treated to produce second concentrated water having an increased concentration of the second target ions and an ion supply chamber for supplying ions, having the opposite polarity to that of the second target ions in the water to be treated, to the second concentrating chamber. The electrodialysis apparatus includes a path for supplying pure water to the anode chamber and the bipolar electrode chamber. The chamber structure further includes a third cation exchange membrane provided between the buffer chamber and the first concentrating chamber, a third anion exchange membrane provided between the first concentrating chamber and the desalting chamber, a fourth cation exchange membrane provided between the desalting chamber and the second concentrating chamber, and a fourth anion exchange membrane provided between the second concentrating chamber and the ion supply chamber.

The water to be treated is preferably a fluorine-containing waste water. Preferably, an amount of pure water supplied to the anode chamber or the cathode chamber is adjusted in such a manner that the fluorine concentration of effluent water from the anode chamber or the cathode chamber becomes not more than 1 mg/L.

The anode chamber and the cathode chamber are preferably filled with ion exchangers. Each chamber is preferably filled with a cation exchange fibrous material in contact with the cation exchange membrane, or an anion exchange fibrous material in contact with the anion exchange membrane.

According to the seventeenth aspect of the present invention, there is provided a waste water treatment method comprising treating waste water at least containing ammonium ions and fluorine by using an electrodialysis apparatus. Accordingly, treated water having a lowered ammonium ion concentration and a lowered fluorine concentration by removing ammonium ions and fluorine from the waste water is produces, and first concentrated water having an increased fluorine concentration and second concentrated water having an increased ammonium ion concentration are produced.

According to the eighteenth aspect of the present invention, there is provided a waste water treatment method comprising treating waste water at least containing metal ions, capable of forming a metal hydroxide sludge, and fluorine by using an electrodialysis apparatus. Accordingly, treated water having a lowered metal ion concentration and a lowered fluorine concentration by removing the metal ions and fluorine from the waste water is produced, and first concentrated water having an increased fluorine concentration and second concentrated water having an increased metal ion concentration are produced.

Waste water at least containing hydrogen peroxide and fluorine may be subjected to hydrogen peroxide decomposition treatment, and the resulting waste water may be supplied to the electrodialysis apparatus. The fluorine concentration of the waste water is preferably more than 1 mg/L and not more than 10,000 mg/L. Furthermore, the fluorine concentration of the treated water is preferably less than 1 mg/L. A least part of the first concentrated water may be supplied to a fluorine recycling apparatus to recover fluorine in the waste water as calcium fluoride (CaF₂).

According to a purpose for introducing of an electrodialysis apparatus, fluorine concentration of water to be treated may be more than 8 mg/L. When treated water is discharged to the outside without reuse, fluorine concentration of treated water may be not less than 8 mg/L that is the effluent standard. It is therefore possible to keep fluorine concentration of treated water at about 5 mg/L by adjusting an operation current of an electrodialysis cell. This make it possible to achieve an energy saving operation method that when an electrodialysis cell is operated while keeping fluorine concentration of treated water at less than 1 mg/L

According to a purpose for introducing of an electrodialysis apparatus, fluorine-concentrated water may be supplied to conventional coagulation-sedimentation facility without supplying to a fluorine recycling apparatus. In this case, an amount of chemicals necessary for coagulation sedimentation is reduced, compared with the case of performing the coagulation-sedimentation treatment on the waste water containing fluorine as it is, leading to merit that the production of sludge can be reduced. Further, because an amount of waste water to be treated is reduced by concentration, there is merit that a scale of a waste water treatment facility can be small. For example, when concentrating fluorine containing waste water of 10 mg/L into 1000 mg/L, an amount of treated water discharged reduces to one hundredth. Therefore, an amount of coagulants necessary for coagulation sedimentation, which is supplied in proportion of the amount of treated water discharged, reduces to about one hundredth, leading to a significant decrease in the production of sludge.

A fluorine-concentrated solution having ammonium ions and fluoride ions concentrated into the same solution can be obtained from fluorine-containing waste water containing ammonium ions. In general, when fluorine is recycled, reaction for fluorine recycling is inhibited and reaction efficiency is reduced if a fluorine-concentrated solution contains ammonium ions. However, when a coagulation-sedimentation treatment of a fluorine-concentrated solution is carried out, performed, reaction efficiency is unaffected by the presence of ammonium ions.

According to the nineteenth aspect of the present invention, there is provided a fluorine treatment system comprising the above-mentioned electrodialysis apparatus and a fluorine recycling apparatus for recovering fluorine-concentrated water from the electrodialysis apparatus as calcium fluoride.

According to the twentieth aspect of the present invention, there is provided a fluorine treatment system comprising the above-mentioned electrodialysis apparatus and a coagulation-sedimentation apparatus for carrying out a coagulation-sedimentation treatment of water comprising at least part of fluorine-concentrated water from the electrodialysis apparatus.

According to the twenty-first aspect of the present invention, there is provided a water recycling system comprising the above-mentioned electrodialysis apparatus and a pure water production apparatus for producing pure water using treated water from the electrodialysis apparatus as raw water.

According to the twenty-second aspect of the present invention, there is provided a water recycling system comprising the above-mentioned electrodialysis apparatus, a detoxification apparatus, a path for supplying effluent water from the detoxification apparatus to the electrodialysis apparatus, and a path for supplying part of treated water from the electrodialysis apparatus to the detoxification apparatus.

According to the twenty-third aspect of the present invention, there is provided a fluorine treatment system comprising the above-mentioned electrodialysis apparatus according, a solid-liquid separation device for carrying out solid-liquid separation of waste water at least containing fluorine, and a path for supplying the waste water, after the solid-liquid separation with thesolid-liquid separation device, to the electrodialysis apparatus.

According to the twenty-fourth aspect of the present invention, there is provided a fluorine treatment system comprising the above-mentioned electrodialysis apparatus, an organic matter separation device for carrying out organic matter separation of waste water at least containing fluorine, and a path for supplying the waste water, after the organic matter separation with the organic matter separation device, to the electrodialysis apparatus.

The above and other objects and advantages of the present invention will be apparent from the following description when taken in conjunction with the accompanying drawings which illustrate preferred embodiments of the present invention by way of example.

### Brief Description of Drawings

FIG. 1 is a schematic diagram showing the construction of an electrodialysis apparatus according to a first embodiment of the present invention;
FIG. 2 is a schematic diagram showing an electrodialysis cell of FIG. 1;
FIG. 3 is a schematic diagram showing the construction of an electrodialysis apparatus according to a second embodiment of the present invention;
FIG. 4 is a schematic diagram showing the construction of an electrodialysis apparatus according to a third embodiment of the present invention;
FIG. 5 is a schematic diagram showing the construction of an electrodialysis apparatus according to a forth embodiment of the present invention;
FIG. 6 is a schematic diagram showing an electrodialysis cell of FIG. 5;
FIG. 7 is a schematic diagram showing the construction of an electrodialysis apparatus according to a fifth embodiment of the present invention;
FIG. 8 is a schematic diagram showing an electrodialysis cell of FIG. 7;
FIG. 9 is a schematic diagram showing the construction of an electrodialysis apparatus according to a sixth embodiment of the present invention;
FIG. 10 is a schematic diagram showing an electrodialysis cell of FIG. 9;
FIG. 11 is a schematic diagram showing the construction of an electrodialysis apparatus according to a seventh embodiment of the present invention;
FIG. 12 is a schematic diagram showing an electrodialysis cell of FIG. 11;
FIG. 13 is a schematic diagram showing the construction of an electrodialysis cell of an electrodialysis apparatus according to an eighth embodiment of the present invention;
FIG. 14 is a schematic diagram showing an example of a fluorine treatment system of combining the electrodialysis apparatus and a fluorine recycling apparatus according to the present invention;
FIG. 15 is a schematic diagram showing an example of a fluorine treatment system of combining the electrodialysis apparatus and a CaF₂ substitution apparatus according to the present invention;
FIG. 16 is a schematic diagram showing an example of a fluorine treatment system of combining the electrodialysis apparatus and a CaF₂ crystallizing apparatus according to the present invention;
FIG. 17 is a schematic diagram showing an example of a fluorine treatment system of combining the electrodialysis apparatus and a coagulation-sedimentation apparatus according to the present invention;
FIG. 18 is a schematic diagram showing an example of a fluorine treatment system of combining the electrodialysis apparatus and a decomposition apparatus according to the present invention;
FIG. 19 is a schematic diagram showing an example of a fluorine treatment system of combining the electrodialysis apparatus and an activated carbon absorption layer according to the present invention; and
FIG. 20 is a schematic diagram showing an example of a fluorine treatment system of combining the electrodialysis apparatus and a vacuum distillation apparatus according to the present invention.

### Best Mode for Carrying Out the Invention

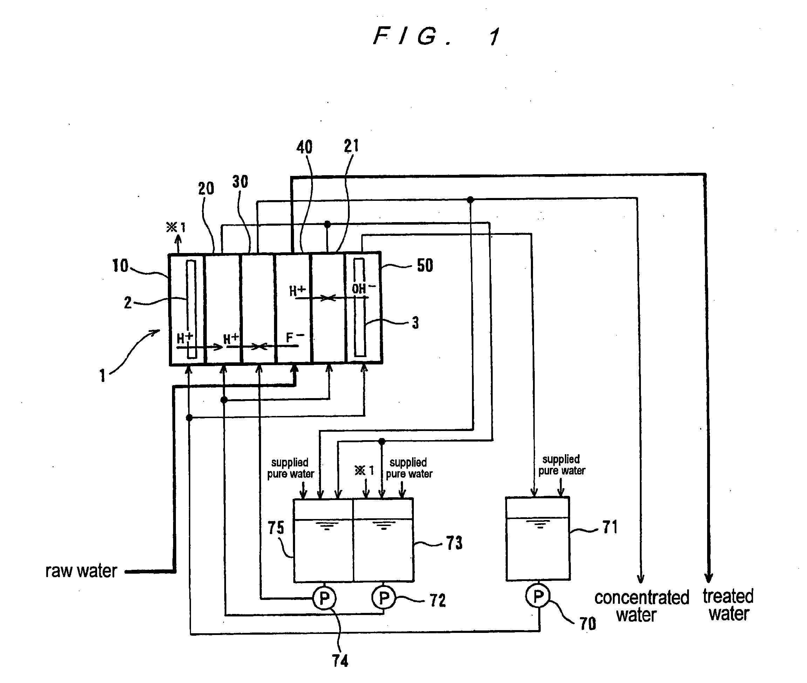

Preferred embodiments of the electrodialysis apparatus according to the present invention will now be described with reference to FIGS. 1 through 20. In FIGS. 1 though 20, the same or equivalent components are given the same reference numeral, and a duplicate description thereof will be omitted.

FIG. 1 is a schematic diagram showing the construction of an electrodialysis apparatus according to a first embodiment of the present invention. As shown in FIG. 1, the electrodialysis apparatus includes an electrodialysis cell 1 having an anode chamber 10, a buffer chamber 20, a concentrating chamber 30, a desalting chamber 40, a concentrating chamber 21 and a cathode chamber 50. The electrodialysis apparatus also includes an electrode liquid tank 71 for supplying pure water to the anode chamber 10 and the cathode chamber 50 by a pump 70, a buffer water tank 73 for supplying buffer water to the buffer chamber 20 and the concentrating chamber 21 by a pump 72, and a concentrated water tank 75 for supplying concentrated water to the concentrating chamber 30 by a pump 74.

An anode 2 is disposed in the anode chamber 10, and a cathode 3 is disposed in the cathode chamber 50. The desalting chamber 40 removes fluoride ions from raw water (water to be treated) containing fluorine, producing treated water having a lowered fluorine concentration. The buffer chamber 20 blocks fluoride ions (target ions) in the raw water from flowing from the concentrating chamber 30 directly into the anode chamber 10. The concentrating chamber 30 concentrates fluoride ions in the raw water, which have moved from the desalting chamber 40, thereby producing concentrated water having an increased fluoride ion concentration.

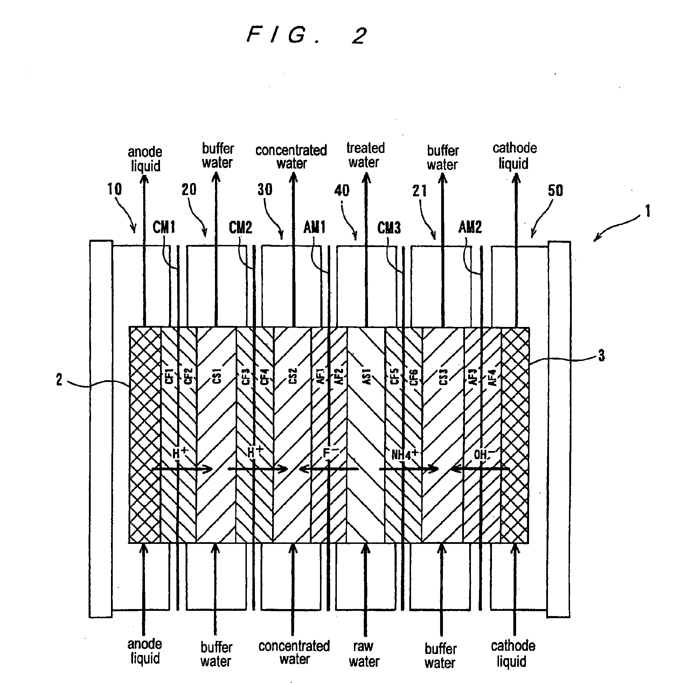

FIG. 2 is a schematic diagram showing the electrodialysis cell 1 of FIG. 1. As shown in FIG. 2, the anode chamber 10 and the buffer chamber 20 are partitioned by a cation exchange membrane CM1 which in an ion exchange membrane, and the buffer chamber 20 and the concentrating chamber 30 are partitioned by a cation exchange membrane CM2 which is an ion exchange membrane. Further, the concentrating chamber 30 and the desalting chamber 40 are partitioned by an anion exchange membrane AM1 which is an ion exchange membrane, and the concentrating chamber 21 and the desalting chamber 40 are partitioned by a cation exchange membrane CM3 which is an ion exchange membrane. In addition, the cathode chamber 50 and the concentrating chamber 21 are partitioned by an anion exchange membrane AM2 which is an ion exchange membrane. In FIG. 2, depiction of packings provided on both sides of each ion exchange membrane is omitted.

The anode chamber 10 is filled with a cation exchange non-woven fabric CF1 which is an ion exchanger. The buffer chamber 20 is filled with a cation exchange non-woven fabric CF2, a cation exchange spacer CS1 and a cation exchange non-woven fabric CF3, which are ion exchangers. An ion exchange non-woven fabric, which is an ion exchanger in the form of a non-woven fabric of dense thin fibers having a large surface area, has a high ability to capture and conduct ions, but has the problem of large pressure loss when filled in an electrodialysis cell. An ion exchange spacer, which is a net-like spacer whose surface has an ion exchange function, and is commonlyused in conventional electrodialysis cells, on the other hand, has excellent water dispersibility and low pressure loss, but has the problem of low ion-capturing ability. The electrodialysis cell 1 of this embodiment, by the filling of such ion exchange non-woven fabric and ion exchange spacer in combination, can attain a low pressure loss while maintaining a high ability to capture and conduct ions.

The concentrating chamber 30 is filled with a cation exchange non-woven fabric CF4, a cation exchange spacer CS2 and an anion exchange non-woven fabric AF1, which are ion exchangers. The desalting chamber 40 is filled with an anion exchange non-woven fabric AF2, an anion exchange spacer AS1 and a cation exchange non-woven fabric CF5, which are ion exchangers.

The concentrating chamber 21 is filled with a cation exchange non-woven fabric CF6, a cation exchange spacer CS3 and an anion exchange non-woven fabric AF3, which are ion exchangers. The cathode chamber 50 is filled with an anion exchange non-woven fabric AF4 which is an ion exchanger.

Pure water as an electrode liquid is supplied from the electrode liquid tank 71 to the anode chamber 10 and the cathode chamber 50. In this embodiment, effluent water from the anode chamber 10, because of its higher fluoride ion concentration than pure water, is all supplied to the buffer water tank 73 without recycling it to the electrode liquid tank 71. It has been confirmed experimentally that effluent water from the cathode chamber 50 generally has a very low fluoride ion concentration which is approximately at the same level as pure water. In this embodiment, therefore, the effluent water is recycled to the electrode liquid tank 71 in order to replenish the electrode liquid. It is also possible to recycle part or the whole of the effluent water from the anode chamber 10 to the electrode liquid tank 71. Further, it is also possible to supply the effluent water from the anode chamber 10 to the concentrating tank 75.

Buffer water is supplied from the buffer water tank 73 to the buffer chamber 20 and the concentrating chamber 21. Effluent water from the buffer chamber 20 and the concentrating chamber 21 is supplied to the buffer water tank 73 and the concentrated water tank 75. Though in this embodiment, part of the effluent water from the buffer chamber 20 and the concentrating chamber 21 is supplied to the concentrated water tank 75, it is also possible to supply the whole effluent to the concentrated water tank 75.

Concentrated water is supplied from the concentrated water tank 75 to the concentrating chamber 30. Effluent water from the concentrating chamber 30 is partly taken out as concentrated water and the remainder of the effluent water is supplied to the concentrated water tank 75.

Raw water is supplied to the desalting chamber 40, and effluent water from the desalting chamber 40 is taken out as treated water.

With this construction, hydrogen ions generated by the electrolysis reaction of water in the anode chamber 10, can be conducted on the cation exchangers CF1, CM1, CF2, CS1, CF3, CM2, CF4 and CS2 and thus can be moved through the buffer chamber 20 into the concentrating chamber 30. Accordingly, the voltages applied to the anode chamber 10 and to the buffer chamber 20 can be kept low without depending on the ion concentrations of the anode liquid and the buffer water.

When water containing anion ions is electodialyzed, the anion ions in the raw water are concentrated in the concentrated water. The concentrated anion ions normally little leak through the anode 2 side cation exchange membranes CM2, CM1 into the buffer chamber 20 or the anode chamber 10, for example. When an object for concentration is fluoride ions, however, part of the fluoride ions in the concentrated water can sometimes pass through the cation exchange membrane CM2, separating the concentrating chamber 30 and the buffer chamber 20, and reach the buffer chamber 20, lying nearer to the anode 2 than the concentrating chamber 30, or even reach the anode chamber 10.

According to the electrodialysis apparatus of this embodiment having the above construction, pure water is always supplied to the anode chamber 10 and fluoride ions, which have leaked from the buffer chamber 20 into the anode chamber 10 are, discharged out of the anode chamber 10, whereby the fluoride ion concentration in the anode chamber 10 can be kept at a very low value. Further, corrosion of the electrode by fluorine can be suppressed.

With reference to the fluorine concentration in the buffer chamber 20, the buffer water in the buffer water tank 73 is supplied with the effluent water from the anode chamber 10, whereby fluoride ions, which have leaked from the concentrating chamber 30 into the buffer chamber 20, can be discharged out of the buffer chamber 20. This makes it possible to keep the fluoride concentration in the buffer chamber 20 at a low value, though somewhat higher than that of the anode chamber 10. Further, since the concentrated water is replenished with the effluent from the buffer chamber 20 and the concentrating chamber 21, the amount of the replenishing pure water added to the concentrated water tank 75 can be reduced.

Further, because of the use of pure water as replenishing water for the electrode liquid, there is no fear of a change or an increase in the fluorine concentration of the replenishing water due to the operating conditions. Thus, the fluorine concentration in the anode chamber 10 can be kept at a very low value regardless of the operating conditions. Further, corrosion of the anode 2 can be prevented more securely. When the treated water produced by the electrodialysis apparatus can be used instead of pure water, as in the case where the quality of the treated water is comparable to pure water, the treated water may be used instead of pure water.

Because the buffer water is replenished with the effluent water from the anode chamber 10, the amount of water discharged out of the apparatus from the anode chamber 10 and the amount of replenishing pure water added to the buffer water can be reduced. Especially when the whole effluent water from the anode chamber 10 is supplied to the buffer water tank 73, the amount of water discharged out of the apparatus from the anode chamber 10 and the amount of replenishing pure water added to the buffer water can be made zero.

Because the concentrated water is replenished with the effluent water from the buffer chamber 20 and the concentrating chamber 21, the amount of replenishing pure water added to the concentrated water and the amount of water discharged out of the apparatus from the buffer chamber 20 and the concentrating chamber 21 can be reduced. Especially when the whole amount of concentrated water is supplied by the effluent water from the buffer chamber 20 and the concentrating chamber 21, the amount of replenishing pure water added to the concentrated water and the amount of water discharged out of the apparatus from the buffer chamber 20 and the concentrating chamber 21 can be made zero.

When the amount of water discharged out of the apparatus from the anode chamber 10 and the amount of water discharged out of the apparatus from the buffer chamber 20 and the concentrating chamber 21 are zero, only the two types of effluents, the treated water and the concentrated water, are discharged from the electrodialysis cell 1, making a simplified piping system possible. The equilibrium fluorine concentrations in the anode chamber 10, the buffer chamber 20 and the concentrating chamber 21 can be arbitrarily adjusted by adjusting the amounts of the electrode liquid supplied to the anode chamber 10 and the cathode chamber 50, and the amounts of the buffer water supplied to the buffer chamber 20 and the concentrating chamber 21. In the embodiment shown in FIG. 1, at least part of the electrode liquid and/or the buffer liquid may be mixed with the raw water or the treated water.

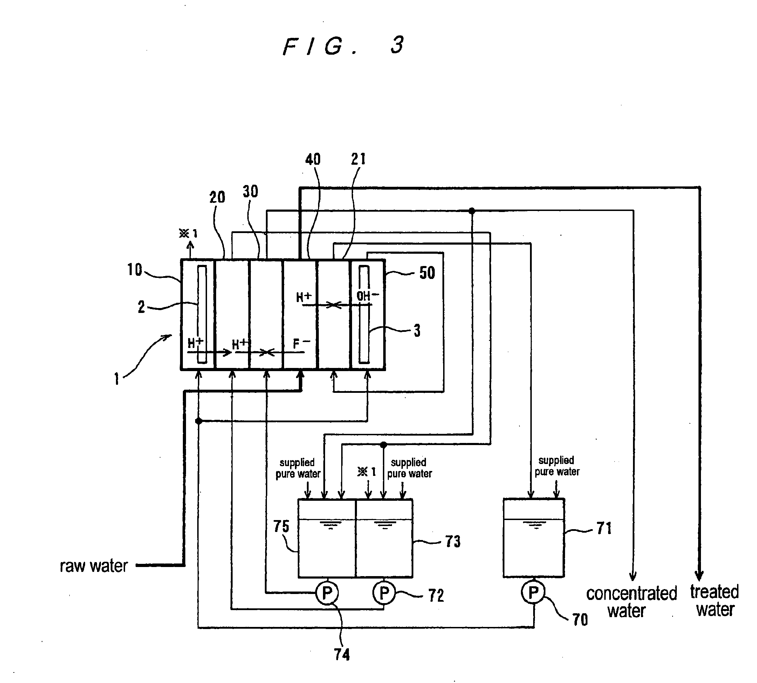

FIG. 3 is a schematic diagram showing the construction of an electrodialysis apparatus according to a second embodiment of the present invention. The electrodialysis apparatus of this embodiment basically has the same construction as the electrodialysis apparatus of the first embodiment, but differs in the following respects.

The buffer water from the buffer tank 73 is supplied only to the buffer chamber 20 and not to the concentrating chamber 21. Instead, the effluent water from the cathode chamber 50 is supplied to the concentrating chamber 21. Further, the effluent water from the concentrating chamber 21 is supplied to the electrode liquid tank 71 to replenish the electrode liquid.

Cations present in raw water are concentrated in the concentrating chamber 21 adjacent to the cathode chamber 50. The use of the construction shown in FIG. 3 is possible when it is determined that the concentrated cations will not adversely affect the treatment performance of the electrodialysis apparatus. It is, of course, possible to supply the effluent water from the concentrating chamber 21 to the buffer tank 73. The advantageous effects of the present invention can be achieved also with such a construction.

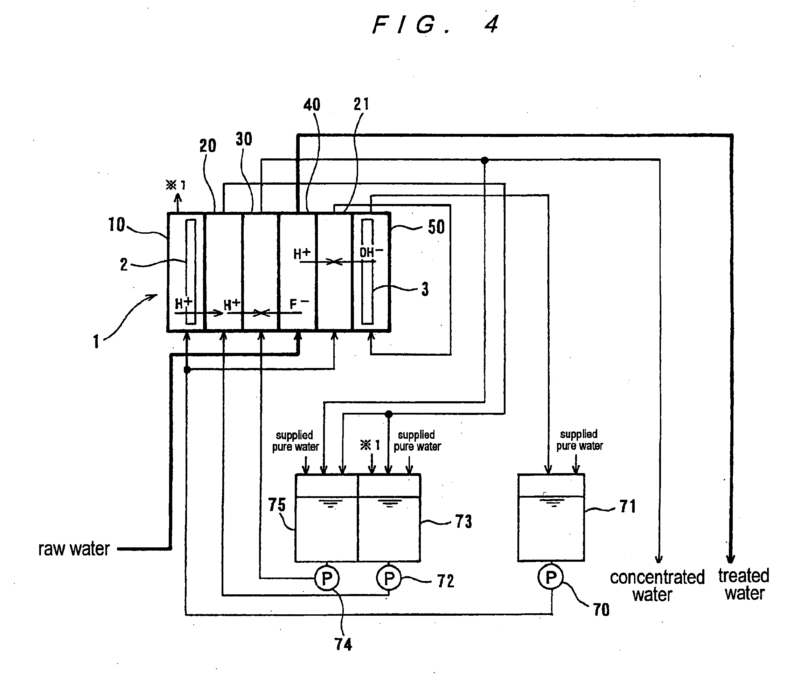

FIG. 4 is a schematic diagram showing the construction of an electrodialysis apparatus according to a third embodiment of the present invention. The electrodialysis apparatus of this embodiment basically has the same construction as the electrodialysis apparatus of the first embodiment, but differs in the following respects.

The buffer water from the buffer tank 73 is supplied only to the buffer chamber 20 and not to the concentrating chamber 21. Instead, the pure water as an electrode liquid is supplied from the electrode liquid tank 71 to the anode chamber 10 and the concentrating chamber 21. Further, the effluent water from the concentrating chamber 21 is supplied to the adjacent cathode chamber 50. The advantageous effects of the present invention can be achieved also with such a construction.

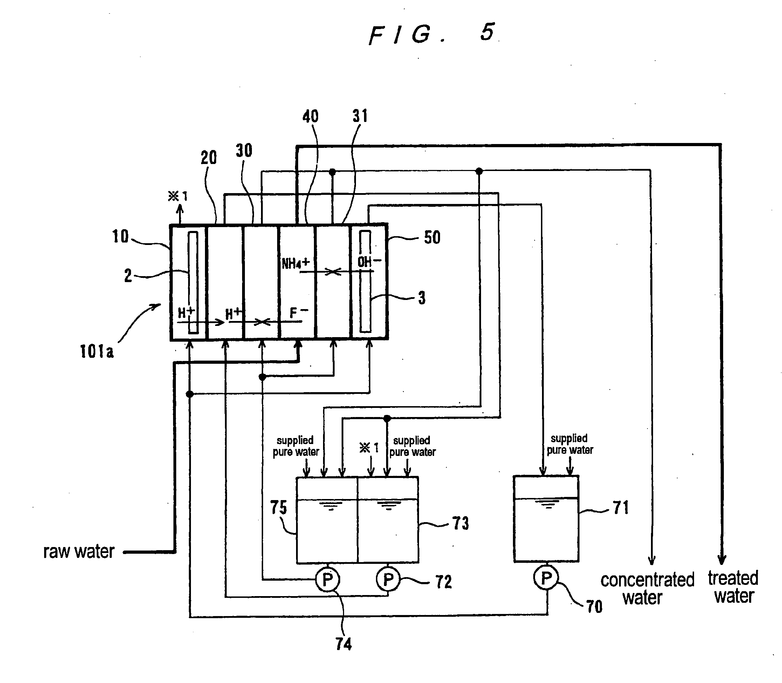

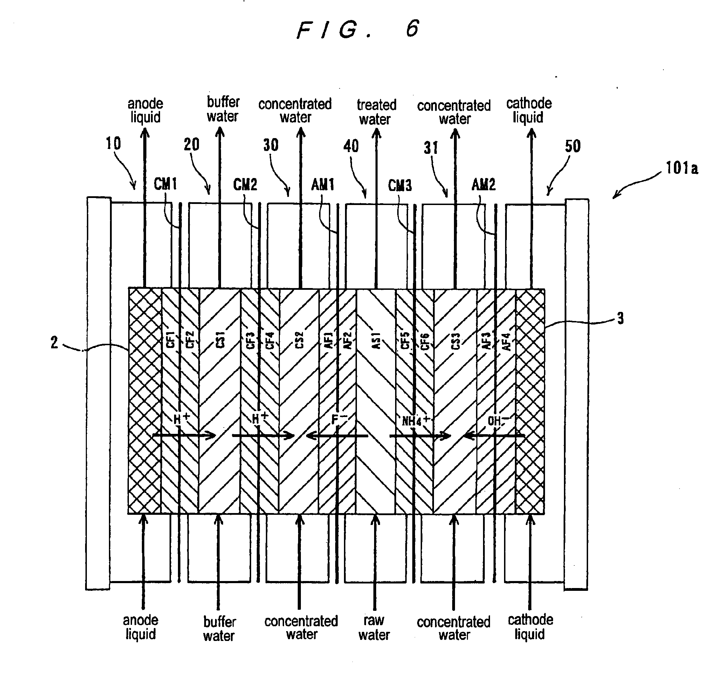

FIG. 5 is a schematic diagram showing the construction of an electrodialysis apparatus according to a fourth embodiment of the present invention, and FIG. 6 is a schematic diagram showing the electrodialysis cell 101a of FIG. 5. The electrodialysis apparatus of this embodiment basically has the same construction as the electrodialysis apparatus of the first embodiment, but differs in that instead of the concentrating chamber 21 to which the buffer water (FIG. 1), the electrode liquid (FIG. 3) or pure water (FIG. 4) is supplied, a concentrating chamber 31, to which the concentrated water is supplied as shown in FIG. 5, is provided adjacent to the cathode chamber 50. The advantageous effects of the present invention can be achieved also with such a construction.

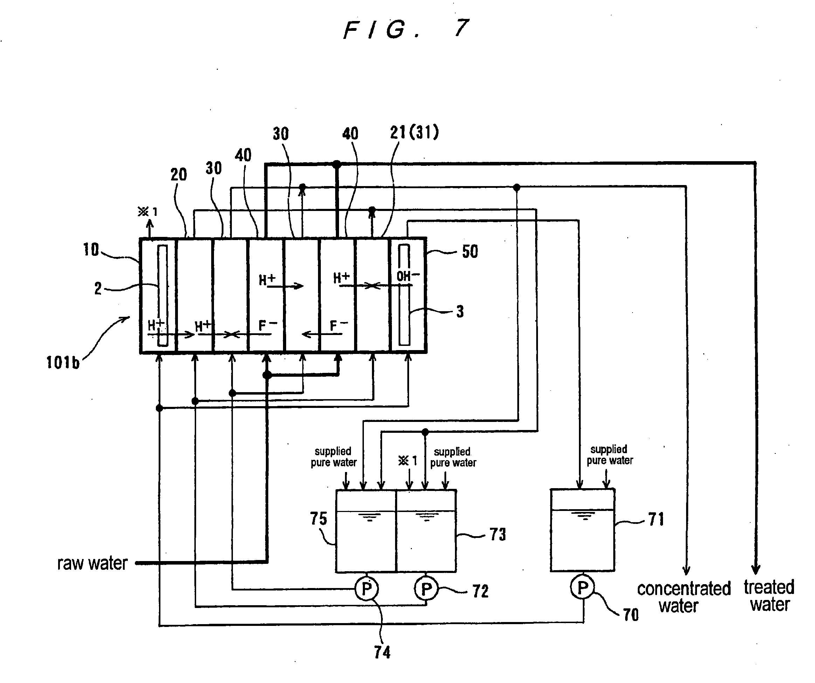

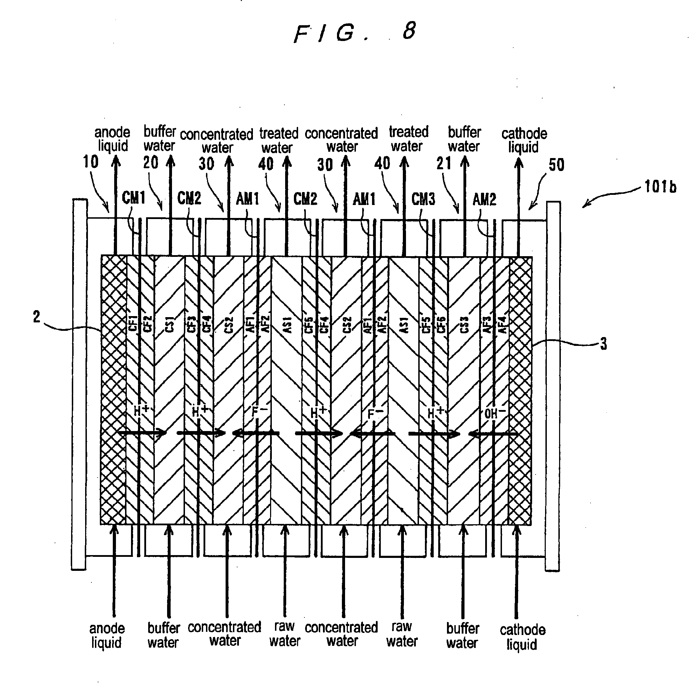

FIG. 7 is a schematic diagram showing the construction of an electrodialysis apparatus according to a fifth embodiment of the present invention, and FIG. 8 is a schematic diagram showing the electrodialysis cell 101b of FIG. 7. The electrodialysis apparatus of this embodiment basically has the same construction as the electrodialysis apparatus of the first embodiment, but differs in that an additional concentrating chamber 30 and an additional desalting chamber 40 are provided between the desalting chamber 40 and the concentrating chamber 30 of FIG. 1. The advantageous effects of the present invention can be achieved also with such a construction. As in the case of FIG. 5, it is also possible to replace the concentrating chamber 21, adjacent to the cathode chamber 50, with the concentrating chamber 31 and supply the concentrated water to the concentrating chamber 31.

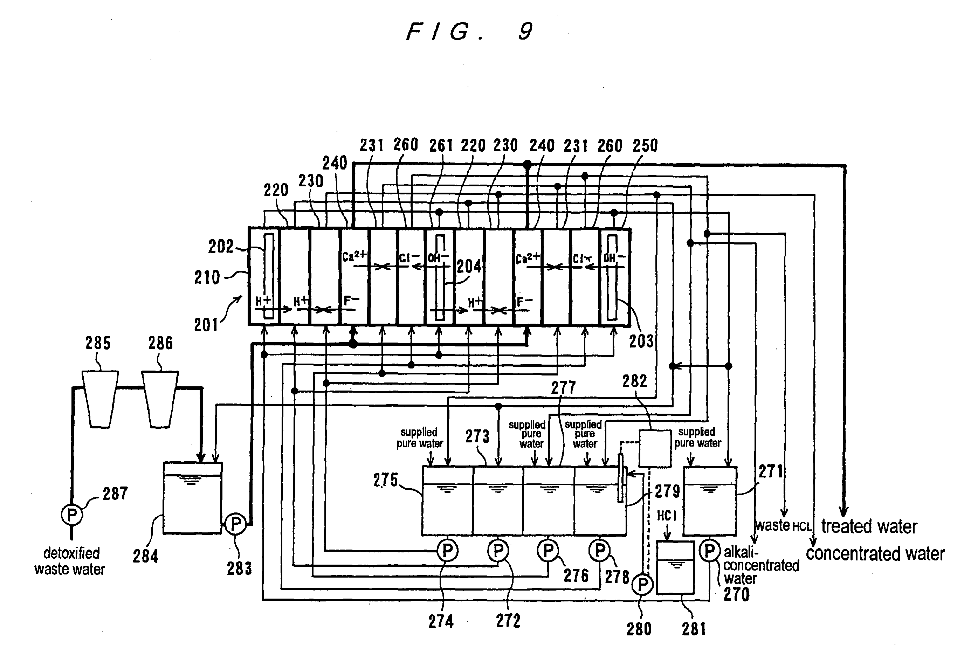

FIG. 9 is a schematic diagram showing the construction of an electrodialysis apparatus according to a sixth embodiment of the present invention. As with the electrodialysis apparatus shown in FIG. 1, the electrodialysis apparatus of this embodiment has the effect of preventing corrosion of the anode and, in addition, can concentrate fluoride ions and metal ions separately when treating fluorine-containing waste water containing the metal ions. Further, metal ions are separated and concentrated not as hydroxide precipitate, but as soluble chloride, which can avoid troubles, such as precipitation, in the electrodialysis cell.

As shown in FIG. 9, the electrodialysis apparatus includes an electrodialysis cell 201 having an anode chamber 210, a buffer chamber 220, an acid concentrating chamber 230, a desalting chamber 240, an alkali concentrating chamber 231, an acid supply chamber 260, a bipolar electrode chamber 261, a buffer chamber 220, an acid concentrating chamber (first concentrating chamber) 230, a desalting chamber 240, an alkali concentrating chamber (second concentrating chamber) 231, an acid supply chamber (ion supply chamber) 260, and a cathode chamber 250. Thus, in this embodiment, the buffer chambers 220, the acid concentrating chambers 230, the desalting chambers 240, the alkali concentrating chambers 231 and the acid supply chambers 260 are provided on both sides of the bipolar electrode chamber 260, respectively.

As shown in FIG. 9, the electrodialysis apparatus also includes an electrode liquid tank 271 for supplying pure water to the anode chamber 210 and the cathode chamber 250 by a pump 270, a buffer water tank 273 for supplying buffer water to the buffer chambers 220 a pump 272, an acid-concentrated water tank 275 for supplying acid-concentrated water to the acid concentrating chambers 230 by a pump 274, an alkali-concentrated water tank 277 for supplying alkali-concentrated water to the alkali concentrating chambers 231 by a pump 276, and an acid supply water tank 279 for supplying acid supply water to the acid supply chambers 260 by a pump 278.

The electrodialysis apparatus also includes an acid stock solution tank 281 for supplying an acid stock solution, such as HCl, to the acid supply water tank 279 by a pump 280, and a pH monitor 282 for measuring the pH in the acid supply water tank 279. Further, the electrodialysis apparatus includes a raw water tank 284 for supplying raw water to the desalting chambers 240 by a pump 283, and a pump287 for supplying detoxified waste water (fluorine-containing water to be treated) to the raw water tank 284 via activated carbon 285 and a cartridge filter 286.

An anode 202 is disposed in the anode chamber 210, and a cathode 203 is disposed in the cathode chamber 250. An electrode 204 is disposed in the bipolar electrode chamber 261. The desalting chamber 240 removes fluoride ions (first target ions) and calcium ions (second target ions) from raw water (water to be treated), producing treated water having a lowered fluorine concentration and a lowered calcium ion concentration. The buffer chamber 220 blocks fluoride ions in the raw water from flowing from the acid concentrating chamber 230 directly into the anode chamber 210. The acid concentrating chamber 230 concentrates fluoride ions in the raw water, which have moved from the desalting chamber 240, thereby producing (first) concentrated water having an increased fluoride ion concentration. The alkali concentrating chamber 231 concentrates calcium ions in the raw water, which have moved from the desalting chamber 240, thereby producing (second) concentrated water having an increased calcium ion concentration. The acid supply chamber 260 supplies ions, having the opposite polarity to that of calcium ions, to the alkali concentrating chamber 231.

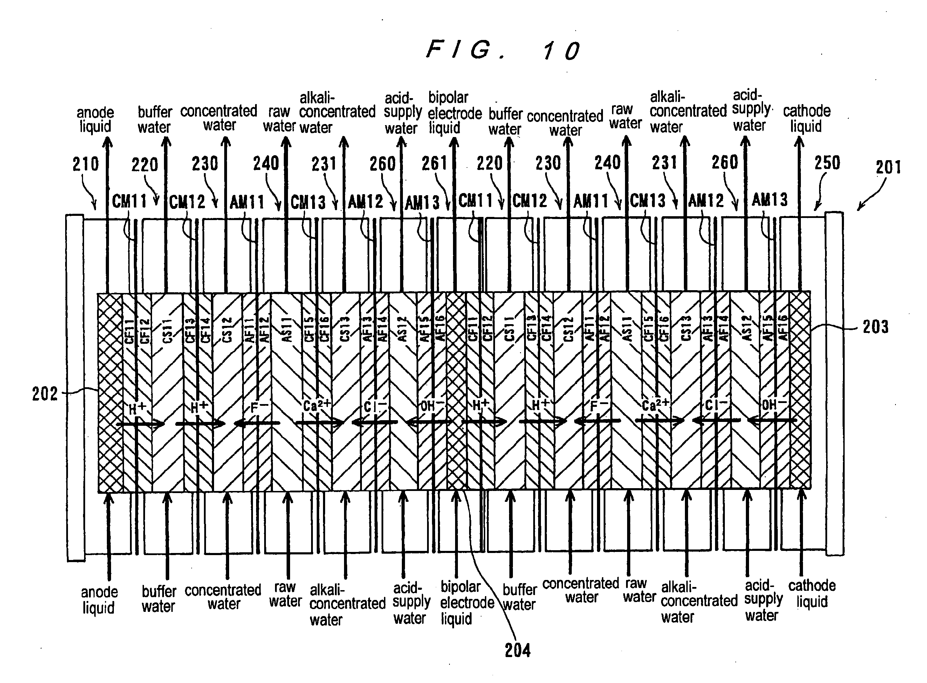

FIG. 10 is a schematic diagram showing the electrodialysis cell 201 of FIG. 9. As shown in FIG. 10, the anode chamber 210 and the buffer chamber 220 are partitioned by a cation exchange membrane CM11 which is an ion exchange membrane, and the buffer chamber 220 and the acid concentrating chamber 230 are partitioned by a cation exchange membrane CM12 which is an ion exchange membrane. The acid concentrating chamber 230 and the desalting chamber 240 are part it ioned by an anion exchange membrane AM11 which is an ion exchange membrane, and the desalting chamber 240 and the alkali concentrating chamber 231 are partitioned by a cation exchange membrane CM13 which is an ion exchange membrane. The alkali concentrating chamber 231 and the acid supply chamber 260 are partitioned by an anion exchange membrane AM12 which is an ion exchange membrane, and the acid supply chamber 260 and the bipolar electrode chamber 261 are partitioned by an anion exchange membrane AM13 which is an ion exchange membrane. In FIG. 10, depiction of packings provided on both sides of each ion exchange membrane is omitted.

The anode chamber 210 is filled with a cation exchange non-woven fabric CF11 which is an ion exchanger. The buffer chamber 220 is filled with a cation exchange non-woven fabric CF12, a cation exchange spacer CS11 and a cation exchange non-woven fabric CF13, which are ion exchangers.

The acid concentrating chamber 230 is filled with a cation exchange non-woven fabric CF14, a cation exchange spacer CS12 and an anion exchange non-woven fabric AF11, which are ion exchangers. The desalting chamber 240 is filled with an anion exchange non-woven fabric AF12, an anion exchange spacer AS11 and a cation exchange non-woven fabric CF15, which are ion exchangers.

The alkali concentrating chamber 231 is filled with a cation exchange non-woven fabric CF16, a cation exchange spacer CS13 and an anion exchange non-woven fabric AF13, which are ion exchangers. The acid supply chamber 260 is filled with an anion exchange non-woven fabric AF14, an anion exchange spacer AS12 and an anion exchange non-woven fabric AF15, which are ion exchangers.

The bipolar electrode chamber 261 is filled with an anion exchange non-woven fabric AF16 and a cation exchange non-woven fabric CF11, which are ion exchangers. The construction of ion exchangers in the portion from the electrode 204 of the bipolar electrode chamber 261 to the cathode 203 of the cathode chamber 250 is exactly the same as the above-mentioned construction of the ion exchangers from the cation exchange non-woven fabric CF11 to the anion exchange non-woven fabric AF16, and a description thereof is herein omitted.

Pure water as an electrode liquid is supplied from the electrode liquid tank 271 to the anode chamber 210, the bipolar electrode chamber 261 and the cathode chamber 250. Effluent water from the anode chamber 210, the bipolar electrode chamber 261 and the cathode chamber 250 is recycled to the electrode liquid tank 271 in order to replenish the electrode liquid.

Buffer water is supplied from the buffer water tank 273 to the buffer chambers 220. Effluent water from the buffer chambers 220 is supplied to the buffer water tank 273 and the raw water tank 284. Part of the effluent water from the anode chamber 210, the bipolar electrode chamber 261 and the cathode chamber 250 is mixed with the effluent water from the buffer chambers 220.

Acid-concentrated water is supplied from the acid-concentrated water tank 275 to the acid concentrating chambers 230. Effluent water from the acid concentrating chambers 230 is partly taken out as acid-concentrated water and the remainder of the effluent water is supplied to the acid-concentrated water tank 275. Alkali-concentrated water is supplied from the alkali-concentrated water tank 277 to the alkali concentrating chambers 231. Effluent water from the alkali concentrating chambers 231 is supplied to the alkali-concentrated water tank 277.

Raw water is supplied from the raw water tank 284 to the desalting chambers 240. Effluent water from the desalting chambers 240 is taken out as treated water.

There is a fear of fluorine flowing into the bipolar electrode chamber 261 from the adjacent buffer chamber 220 on the cathode chamber 250 side. In this embodiment, therefore, pure water is supplied to the bipolar electrode chamber 261 as with the anode chamber 210. As with the effluent water from the anode chamber 210, the effluent water from the bipolar electrode chamber 261 is also used as replenishing water for the buffer water tank 273.

With this construction, an acid and a metal ion can be concentrated separately. Further, a metal ion forms a soluble salt with a cation ion derived from a mineral acid and supplied by electrophoresis from the acid supply chambers 260, whereby precipitation of a metal hydroxide or the like is prevented. For example, when hydrochloric acid is used as the mineral acid, calcium ions contained in the raw water can be concentrated in the form of highly-soluble calcium chloride.

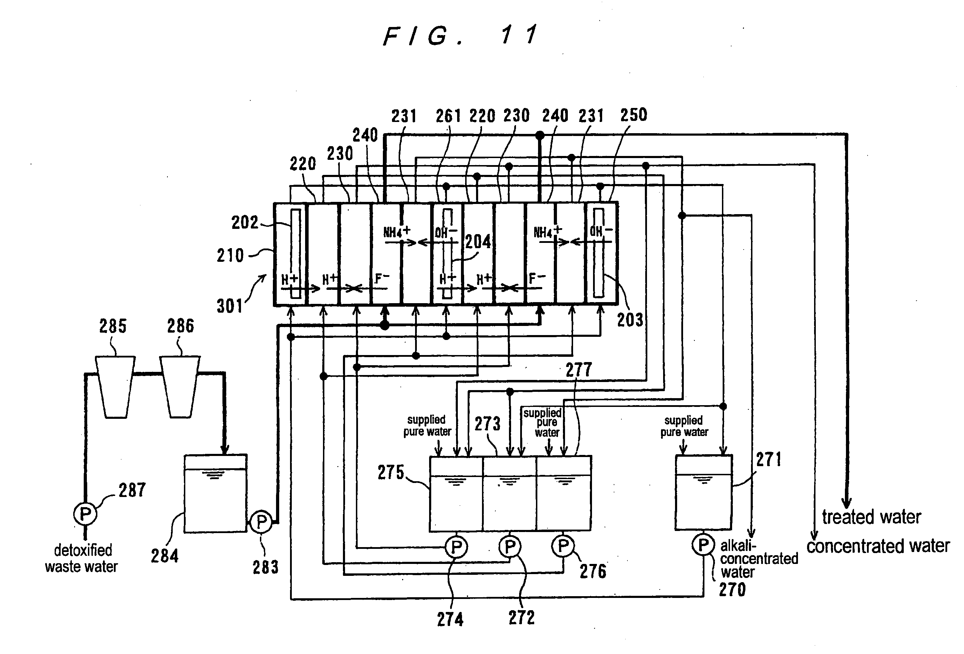

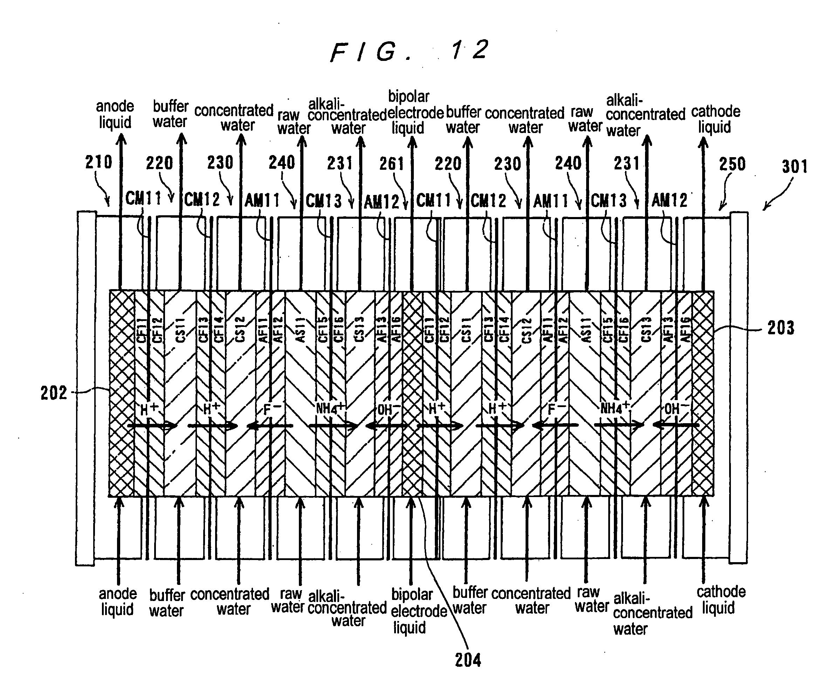

FIG. 11 is a schematic diagram showing the construction of an electrodialysis apparatus according to a seventh embodiment of the present invention, and FIG. 12 is a schematic diagram showing the electrodialysis cell 301 of FIG. 11. The electrodialysis cell 301 is the same as the above-mentioned electrodialysis cell of the sixth embodiment except that the cell 301 is not provided with the acid supply chambers 260 on the cathode 203 side of the alkali concentrating chambers 231. Such a construction can be used to concentrate positive ions (cations), such as ammonium ions, which will not precipitate even in an alkaline condition.

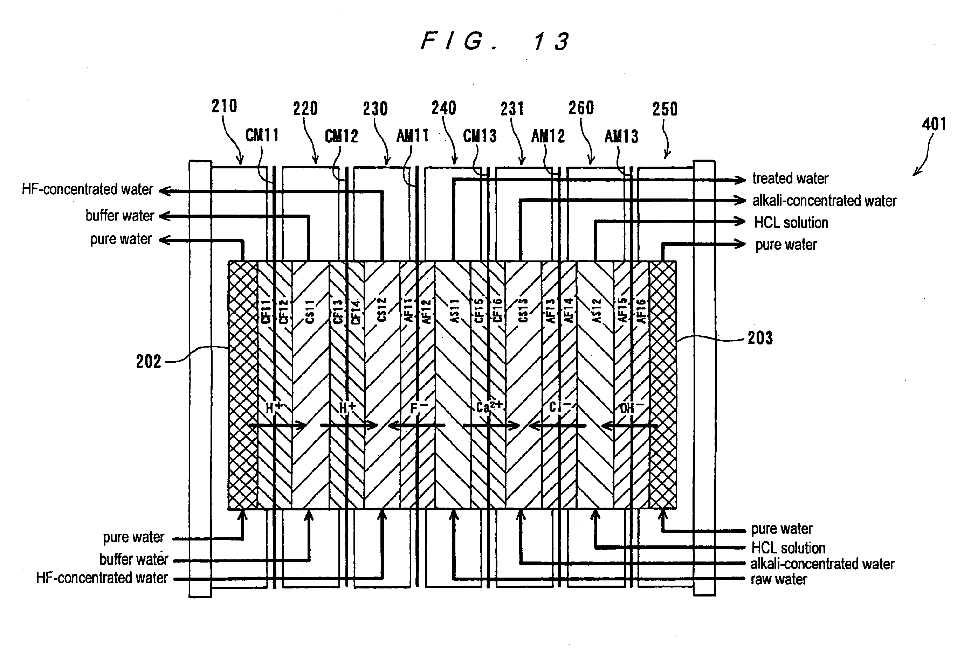

FIG. 13 is a schematic diagram showing an electrodialysis cell 401 of an electrodialysis apparatus according to an eighth embodiment of the present invention. As shown in FIG. 13, the electrodialysis cell 401 comprises the anode chamber 210, the buffer chamber 220, the acid concentrating chamber 230, the desalting chamber 240, the alkali concentrating chamber 231, the acid supply chamber 260 and the cathode chamber 250, and thus corresponds to the above-mentioned electrodialysis cell 201 of the sixth embodiment from which the counterpart chambers and the bipolar electrode chamber 261 are deleted. The advantageous effects of the present invention can be achieved also with such a construction.

In each of the above-mentioned embodiments, the electrodialysis apparatus preferably performs a constant-current operation or a constant-voltage operation preferably at a current density of not more than 10 A/dm², especially not more than 3 A/dm². A thickness of each desalting chamber and a thickness of each concentrating chamber are both 1 to 10 mm, preferably 2 to 4 mm. When an ion exchanger in a sheet-like form, such as a non-woven fabric or a spacer, is used, the number and the types of sheets in each chamber can be set arbitrarily. Preferably, liquids are supplied to each chamber so that the fluorine concentration in an anode chamber becomes less than 1 mg/L and the fluorine concentration in a buffer chamber becomes less than 10 mg/L.

The electrodes may be made of platinum, tantalum, niobium, diamond, SUS, or the like. Alternatively, the electrodes may be comprised of a base metal, such as titanium, nickel, Monel, hastelloy or inconel plated with platinum, gold, iridium oxide, or the like.

The electrodes may be in the form of a flat plate or a mesh lath having water permeability and gas permeability. The concentration of the concentrated water is not limited to a specific range. However, the concentrated water preferably has a cation concentration or an anion concentration of 100 to 100000 mg/l. Further, the concentration of the raw water is not limited to a specific range. However, the raw water preferably has a cation concentration or an anion concentration of 10 to 500 mg/l. In this case, the concentration of the treated water can be adjusted to a desired value by adjusting operational conditions such as a current value. For example, the treated water has a cation concentration or an anion concentration of 0.01 to 10 mg/l.

Pure water to be supplied to the anode chamber, the cathode chamber, and the bipolar electrode chamber is not limited to a specific type of pure water. All types of pure water that is generated by various pure water generation methods, which have been employed by one ordinarily skilled in the art, can be used. For example, pure water generated by known methods including RO (a reverse osmosis membrane method), an ion exchange method, a distillation method, or an electric desalting method, or a combination thereof can be used. Alternatively, ultrapure water, which is generated by further purifying pure water can be used. Most preferably, an amount of pure water supplied to the anode chamber is set such that a fluorine concentration in the anode chamber becomes less than 1 mg/L.

The ion exchangers used in the anode chamber, the cathode chamber, the bipolar electrode chamber, the buffer chamber, the desalting chamber and the concentration chamber of above-describer electrodialysis apparatus may comprise a fibrous material including a base of polymer fibers to which an ion exchange group is introduced by graft polymerization. The base of polymer fibers to be grafted may be formed by single fibers of polyolefin such as polyethylene or polypropylene, or composite fibers having a core portion and a sheath portion which are made of different polymers. For example, such composite fibers may have a sheath-core structure including a sheath made of polyolefin such as polyethylene and a core made of other polymer such as polypropylene. When an ion exchange group is introduced into such composite fibers by radiation-induced graft polymerization, a resultant fibrous material is suitable for a material for the aforementioned ion exchangers because it has an excellent ion exchange capacity and a uniform thickness. The fibrous ion exchange material may be in the form of a woven fabric, a non-woven fabric, or the like.

Further, the ion exchangers used as a spacer member in the form of a diagonal net or the like may comprise polyolefin resin. For example, such polyolefin resin is produced by providing an ion exchange function to a polyethylene diagonal net, which is widely employed in electrodialysis cells, by using radiation-induced graft polymerization. The resultant polyolefin resin has an excellent ion exchange capacity and an excellent function to disperse water.

Radiation-induced graft polymerization comprises irradiating a polymer base with a radiation ray to produce a radical, and allowing the radical to react with a monomer to introduce the monomer into the polymer base. Radiation rays for radiation-induced graft polymerization include α-rays, β-rays, γ-rays, electron beams, ultraviolet rays, and the like. Particularly, γ-rays or electron beams are preferably used for the purposes of the present invention. Radiation-induced graft polymerization includes some types of methods such as pre-irradiation graft polymerization and co-irradiation graft polymerization. Pre-irradiation graft polymerization comprises previously irradiating a graft base with a radiation ray and then brining the base into contact with a grafting monomer. Co-irradiation graft polymerization comprises irradiating a base and a monomer with a radiation ray at the same time. Both methods canbe employed for the purposes of the present invention.

Further, depending upon a manner of contact between a monomer and a base, polymerization methods are classified into a liquid-phase graft polymerization method, which comprises performing polymerization while a base is immersed in a monomer solution, a gas-phase graft polymerization method, which comprises performing polymerization while a base is brought into contact with vapor of a monomer, and an immersion gas-phase graft polymerization method, which comprises first immersing a base in a monomer solution, taking the base out of the monomer solution, and performing polymerization in a gas phase. These methods can be applicable to the present invention.

Ion exchange groups to be introduced into fibrous bases such as a non-woven fabric or spacer bases are not limited to a specific type of ion exchange groups. Various kinds of cation exchange groups and anion exchange groups can be used. For example, cation exchange groups include strongly acidic cation exchange groups such as sulfone group, moderately acidic cation exchange groups such as phosphoric group, and weakly acidic cation exchange groups such as carboxyl group. Anion exchange groups include weakly basic anion exchange groups such as primary, secondary, and tertiary amino groups, and strongly basic anion exchange groups such as quaternary ammonium group. Further, an ion exchanger having both of the aforementioned cation and anion groups may also be employed.

The ion exchangers may have a functional group derived from iminodiacetic acid or its sodium salt, a functional group derived from various amino acids including phenylalanine, lysine, leucine, valine, proline or their sodium salts, or a functional group derived from iminodiethanol.

Monomers having an ion exchange group may include acrylic acid (AAc), methacrylic acid, sodium styrenesulfonate (SSS), sodium methallylsulfonate, sodium allylsulfonate, sodium vinylsulfonate, vinylbenzyl trimethylammonium chloride (VBTAC), diethylaminoethyl methacrylate, and dimethylaminopropylacrylamide.

For example, while sodium styrenesulfonate is used as a monomer, radiation-induced graft polymerization is performed to introduce sulfone group of a strongly acidic cation exchange group directly into a base. Further, while vinylbenzyl trimethylammonium chloride is used as a monomer, radiation-induced graft polymerization is performed to introduce quaternary ammonium group of a strongly basic anion exchange group directly into a base.

The monomer having groups that can be converted into ion exchange groups may include acrylonitrile, acrolein, vinylpyridine, styrene, chloromethylstyrene, and glycidyl methacrylate (GMA). For example, glycidyl methacrylate is introduced into a base by radiation-induced graft polymerization so as to react with a sulfonating agent such as sodium sulfite. Thus, sulfone group of a strongly acidic cation exchange group can be introduced into the base. Alternatively, graft polymerization is performed on a base with chloromethylstyrene, and then the base is immersed in an aqueous solution of trimethylamine to perform quaternary-ammonification. Thus, quaternary ammonium group of a strongly basic anion exchange group can be introduced into the base.

Further, graft polymerization is performed on a base with chloromethylstyrene, and the base reacts with a sulfide to produce a sulfonium salt. Then, the sulfonium salt reacts with sodium iminodiacetate. Thus, sodium iminodiacetate group of a functional group can be introduced into the base. Alternatively, graft polymerization is performed on a base with chloromethylstyrene, and chloro group is substituted with iodine group. Then, the iodine group reacts with an iminodiacetic acid diethyl ester to substitute the iodine group with an iminodiacetic acid diethyl ester group. Thereafter, the ester group reacts with sodium hydroxide to convert the ester group into sodium salt. Thus, sodium iminodiacetate of a functional group can be introduced into the base.

Among the aforementioned various types of ion exchangers, an ion exchange fibrous material in the form of a non-woven fabric or a woven fabric is particularly preferable. Fibrous materials such as a woven fabric or a non-woven fabric have surface areas considerably larger than those of materials in the form of resin beads or a diagonal net. Accordingly, a larger amount of ion exchange groups can be introduced into the fibrous materials. Further, unlike resin beads in which ion exchange groups are present in micropores or macropores within the beads, such fibrous materials can have all the ion exchange groups on surfaces of fibers. Accordingly, metal ions in water to be treated can readily be diffused into the vicinity of ion exchange groups. Thus, the ions are adsorbed by ion exchange. Therefore, the use of a fibrous ion exchange material can improve removal and recovery efficiency of metal ions.

In addition to the aforementioned fibrous ion exchange materials, any ion exchange resin beads known in the art may be used for an ion exchange material. For example, beads including polystyrene, whichiscrosslinked with divinylbenzene, are used as a base resin and sulfonated by a sulfonating agent such as sulfuric acid or chlorosulfonic acid. Thus, sulfone group is introduced into the base resin to produce strongly acidic cation exchange resin beads useable for above-mentioned embodiments.

This production method has been known in the art. A variety of products produced by this method are now commercially available as cation exchange resin beads. Further, the resin beads may have a functional group derived from iminodiacetic acid and its sodium salt, a functional group derived from various amino acids such as phenylalanine, lysine, leucine, valine, praline, and their sodium salts, and a functional group derived from iminodiethanol.

When waste water at least containing ammonium ions and fluorine is treated by means of any of the electrodialysis apparatuses of the above-mentioned embodiments, ammonium ions and fluorine can be removed from the waste water to produce treated water having a lowered ammonium ion concentration and a lowered fluorine concentration, and to produce the first concentrated water having an increased fluorine concentration and the second concentrated water having an increased ammonium ion concentration. When waste water at least containing metal ions, capable of forming a metal hydroxide sludge, and fluorine is treated by means of any of the electrodialysis apparatuses of the above-mentioned embodiments, the metal ions and fluorine can be removed from the waste water to produce treated water having a lowered metal ion concentration and a lowered fluorine concentration, and to produce the first concentrated water having an increased fluorine concentration and the second concentrated water having an increased metal ion concentration.

In the case of waste water containing hydrogen peroxide and fluorine, the waste water may first be subj ected to a hydrogen peroxide decomposition treatment and then supplied to an electrodialysis apparatus. The fluorine concentration of waste water is preferably more than 1 mg/L and not more than 1,000 mg/L, and the fluorine concentration of treated water is preferably less than lmg/L.

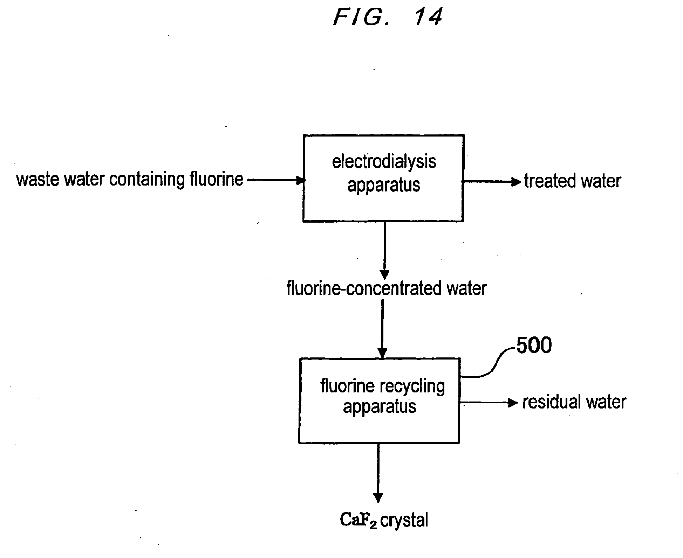

The above-mentioned electrodialysis apparatus can be combined with a fluorine recycling apparatus to constitute a fluorine treatment system. For example, as shown in FIG. 14, waste water containing fluorine is treated by the above-mentioned electrodialysis apparatus, and the resulting fluorine-concentrated water is supplied to a fluorine recycling apparatus 500, where fluorine in the waste water can be recovered as calcium fluoride (CaF₂) crystal.

The above-mentioned electrodialysis apparatus is operated or controlled as follows. First, a fluorine-concentration measuring device is provided for measuring a concentration of fluorine in the treated water or the fluorine-concentrated water obtained from the electrodialysis apparatus, or in the raw water. A conductivity meter for measuring electrical conductivity, a fluorine-concentration meter for measuring a concentration of fluorine using an ion electrode method or the like can be used as the fluorine-concentration measuring device. Providing such a measuring device can allow monitoring of a treatment performance. Further, a flow meter can be provided in a raw-water line and/or a treated water line, so that a fluorine load can be monitored.

It is preferable to provide a fluorine-concentration controlling device for controlling the concentration of fluorine in the treated water. A preferable example of such a fluorine-concentration controlling device is a device operable to automatically adjust an amount of electricity to be supplied to the electrodialysis apparatus based on a monitoring value of the concentration of fluorine in the raw water, the treated water or the concentrated water, the fluorine load, or the treatment performance. Another preferable example of the fluorine-concentration controlling device is a device operable to automatically adjust a flow rate of the raw water using a flow rate adjustment valve based on the above-mentioned monitoring value. With this structure, the concentration of fluorine in the treated water can be automatically controlled. The raw water may be automatically supplied to the ion exchange resin layer onlywhen the concentration of fluorine in the treated water is higher than a predetermined value. In this case, the quality of the treated water can be more stabilized. Further, the fluorine-concentration measuring device may be used to detect that the concentration of the fluorine-concentrated water is decreased to less than a predetermined value or that the concentration of the treated water is increased to a predetermined value. With this structure, it is possible to output an error signal indicating a failure in the electrodialysis apparatus, such as tearing of the ion exchange membrane.

Regardless of types of secondary treatment apparatuses for the fluorine-concentrated water (e. g., a fluorine recycling apparatus, a coagulation-sedimentation apparatus, a vacuum distillation apparatus), the fluorine-concentrated water having a stable concentration of fluorine is supplied to such secondary treatment apparatuses, so that the secondary treatment apparatuses can stably perform secondary treatment on the fluorine-concentrated water. Examples of the above fluorine recycling apparatus include a CaF₂ crystallizing apparatus and a CaF₂ substitution apparatus for recovering fluorine by causing reaction between fluorine and calcium carbonate.

Controlling of the concentration of fluorine in the fluorine-concentrated water is performed as follows. Based on the measurement value of the fluorine-concentration measuring device, such as the conductivity meter or fluorine concentrationmeter, mounted on the fluorine-concentratedwater line, an amount of fluorine-concentrated water to be drawn from thefluorine-concentrated waterlineor a fluorine-concentrated water tank (i.e., an amount of fluorine-concentrated water to be sent to the secondary treatment apparatus) is adjusted, or an amount of water to be supplied to the fluorine-concentrated water line or the fluorine-concentrated water tank is adjusted. Further, it is possible to automatically adjust an amount of electricity to be supplied or a flow rate of the raw water in the electrodialysis apparatus.

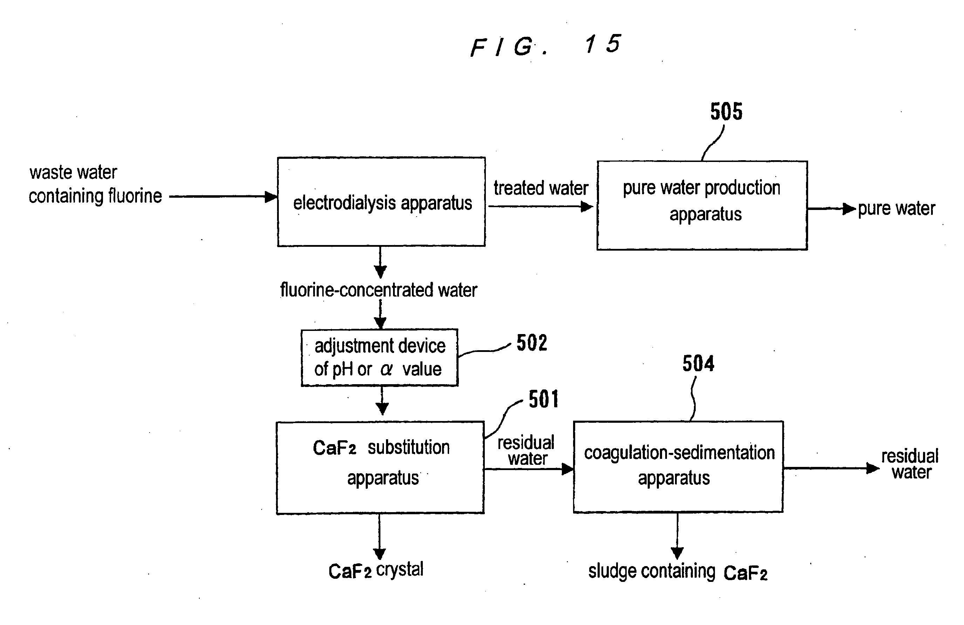

In order to optimize the operational conditions of the secondary treatment apparatus for the fluorine-concentrated water, the following structures can be employed. As shown in FIG. 15, for example, the electrodialysis apparatus according to the present invention is combined with a CaF₂ substitution apparatus 501, serving as a fluorine recycling apparatus, to thereby constitute a fluorine treatment system for recovering fluorine in the waste water as CaF₂ crystal. A measuring device is provided for measuring a pH or α value (a value of acidity) of the fluorine-concentrated water obtained from the above electrodialysis apparatus. Further, an adjustment device 502 is preferably provided for adjusting and optimizing a pH or α value of the waste water by introducing acid or alkali. With these structures, calcium carbonate particles used in the CaF₂ substitution apparatus 501 can be prevented frombeing dissolved. Further, purity of the CaF₂ crystal obtained can be increased.

Particularly, detoxified waste water may contain hydrochloric acid, sulfuric acid, nitric acid, or the like, in addition to hydrofluoric acid. These acids, other than hydrofluoric acid, have properties that dissolve calcium carbonate. The electrodialysis apparatus according to the present invention may possibly concentrate these acids together with hydrofluoric acid. Therefore, for example, when treating detoxification apparatus waste water (detoxified waste water) as the fluorine-concentrated water, the above-mentioned adjustment device 502 is operated so as to increase the pH or decrease the α value (acidity) to thereby prevent dissolution of calcium carbonate. It is preferable to introduce a residual water from the CaF₂ substitution apparatus 501 to a coagulation-sedimentation apparatus 504 and to separate and remove fluorine as sludge from the residual water in the coagulation-sedimentation apparatus 504.

The electrodialysis apparatus according to the present invention can set operational conditions such that the concentration of fluorine in the treated water is below a waste water reference value of 8 mg-F/1. Therefore, a further coagulation-sedimentation treatment is not needed for the treated water. Accordingly, it is possible to release or recycle the treated water without establishing a large-scale coagulation-sedimentation treatment facility. For example, as shown in FIG. 15, by introducing the treated water discharged from the electrodialysis apparatus into a pure water production apparatus 505 so as to reuse the treated water as raw water, an amount of water to be used in the facility (purchase cost of water) can be reduced.

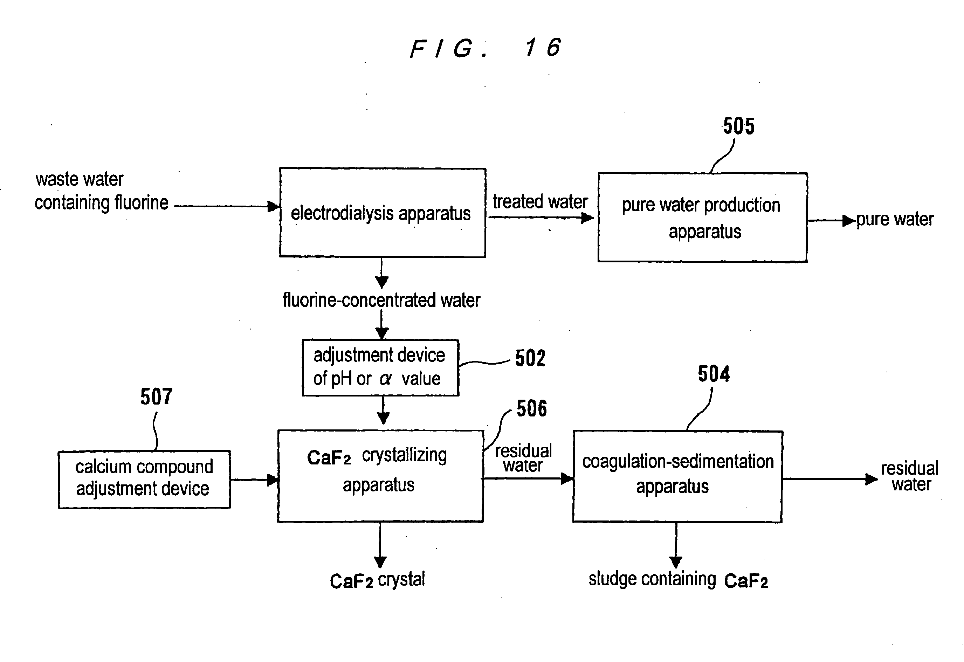

Further, for example, as shown in FIG. 16, the electrodialysis apparatus according to the present invention can be combined with a CaF₂ crystallizing apparatus 506 as a fluorine recycling apparatus to constitute a fluorine treatment system for recovering fluorine in the waste water as CaF₂ crystal. In this case, the adjustment device 502 can adjust the pH or α value (acidity) of the fluorine-concentrated water to a suitable value for crystallization.

Further, a calcium compound adjustment device 507 may be provided for adjusting an amount of calcium compound (e.g., calcium chloride, calcium hydroxide) to be added in the CaF₂ crystallizing apparatus 506, so that an appropriate amount of calcium compound is added in accordance with the measurement value of the fluorine-concentration measuring device for the fluorine-concentrated water. With this structure, even when the concentration of fluorine in the fluorine-concentrated water fluctuates, the amount of calcium compound to be added can be adjusted according to such fluctuation. Therefore, the resulting CaF₂ crystal can have a desired purity and a desired particle size. It is preferable to introduce a residual water from the CaF₂ crystallizing apparatus 506 to the coagulation-sedimentation apparatus 504 and to separate and remove fluorine as sludge from the residual water in the coagulation-sedimentation apparatus 504.

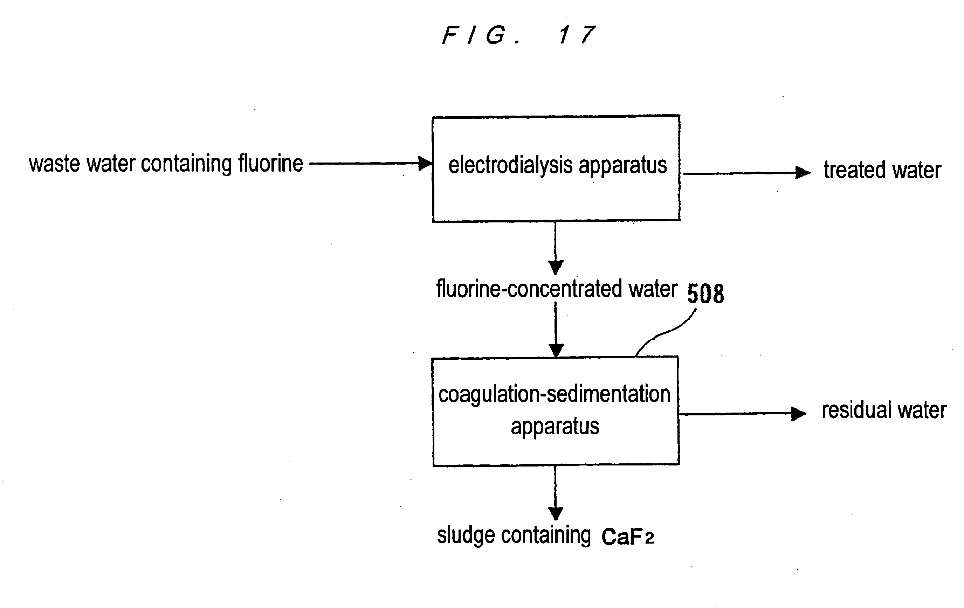

As shown in FIG. 17, the electrodialysis apparatus according to the present invention can be combined with a coagulation-sedimentation treatment apparatus 508 for performing coagulation-sedimentation treatment on water containing at least part of the fluorine-concentrated water, so that fluorine in the fluorine-concentrated water can be separated and removed as sludge containing CaF₂. In this case, even if the concentration of fluorine in the waste water is extremely low and the coagulation-sedimentation treatment cannot properly be performed, the concentration of fluorine can be increased to a level high enough to properly perform the coagulation-sedimentation treatment. Further, because an amount of fluorine-concentrated water is smaller than an amount of the waste water containing fluorine, an amount of coagulating agent to be added (e.g., an amount used per day) can be small, compared with the case of performing the coagulation-sedimentation treatment on the waste water containing fluorine as it is. Further, a small treatment facility can be used to separate solid and liquid fromone another. For example, when concentrating fluorine in the waste water ten times, the amount of treated water discharged from the coagulation-sedimentation treatment apparatus 508 canbe reduce to one-tenth.

In a case where the waste water containing fluorine further contains solid substances, such as a suspension substance and a powdery substance, these solid substances are separated in advance, so that fluorine can be separated from such waste water and can thus be concentrated. Examples of such waste water include detoxified waste water. In addition to a PFC gas, a gas containing silica is introduced into the detoxification apparatus. Because of this fact, a large amount of silica particles are produced as a result of gas decomposition treatment of the detoxification apparatus, and are mixed into waste water. Examples of the detoxification apparatus include a combustion-type or thermal-type apparatus that produces waste water during operation.

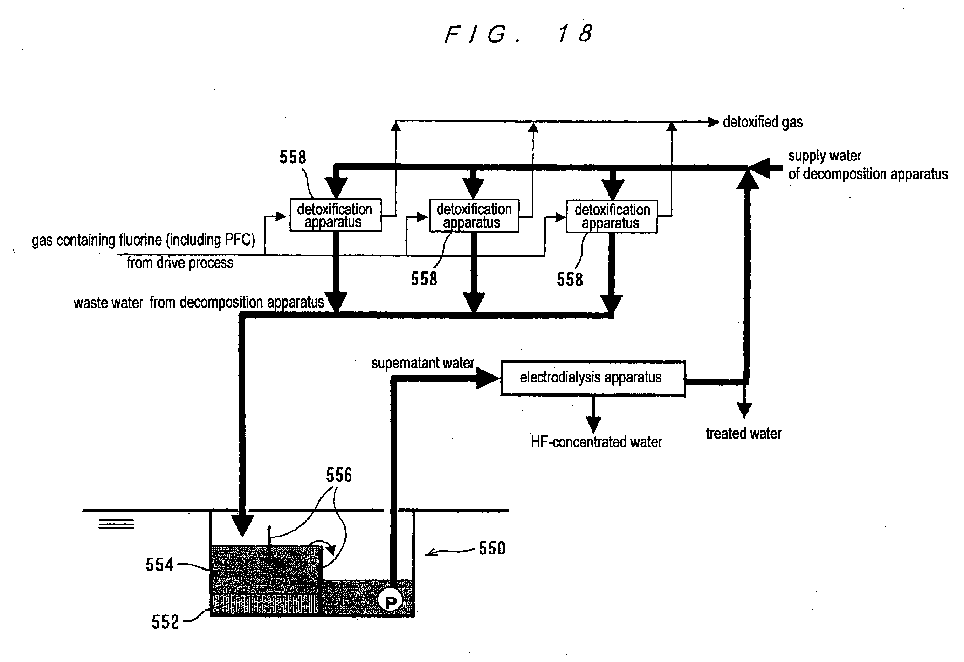

In a case of using such detoxification apparatus, it is preferable to use a fluorine treatment system in which the waste water containing fluorine is introduced into the electrodialysis apparatus via a solid-liquid separation device, such as a sedimentation-separation tank 550, as shown in FIG. 18. In FIG. 18, solid substances in the waste water precipitate out to form a sludge layer 552. In this system, supernatant water 554 is introduced into the electrodialysis apparatus. In this case, since the supernatant water 554 may contain a slight amount of suspended solid, it is preferable to provide a safety filter through which the supernatant water 554 is introduced into the electrodialysis apparatus. If the waste water possibly contains an organic substance, in order to avoid contamination of the ion exchange membrane in the electrodialysis apparatus by the organic substance, it is preferable to further provide an activated carbon treatment layer through which the supernatant water 554 is introduced into the electrodialysis apparatus.

Any known devices including a known film (filter) separation device and a known centrifugal separator can be used as the solid-liquid separation device, other than the sedimentation-separation tank 550. If the waste water contains a large amount of solid substances, it is preferable to use the sedimentation-separation tank 550 as the solid-liquid separation device. In FIG. 18, a plurality of partition plates 556 are provided for the purpose of preventing entry of the sludge 552 into the downstream side and for the purpose of causing the water to take a detour. Although the detoxification apparatus itself may have therein a solid-liquid separation tank or a filter for separating solid substances in the form of large particles, it is preferable to separately provide the above solid-liquid separation device downstream of the detoxification apparatus.

The treated water from the electrodialysis apparatus has a sufficiently lowered concentration of fluorine. Therefore, the treated water can be circulated as supply water of the detoxification apparatus 558, and the amount of water to be used can be small. Further, because part of the treated water is discharged from the electrodialysis apparatus, a small amount of substances can be prevented from being deposited in a system.

In a case where the waste water containing fluorine further contains organic substances, such as surfactant, these organic substances are separated in advance, so that fluorine can be separated from such waste water and can thus be concentrated. Examples of such waste water include waste water derived from hydrofluoric acid containing surfactant or buffered hydrofluoric acid (NH₄F), and waste water from a detoxification apparatus that is supplied with industrial water containing a slight amount of organic substances.

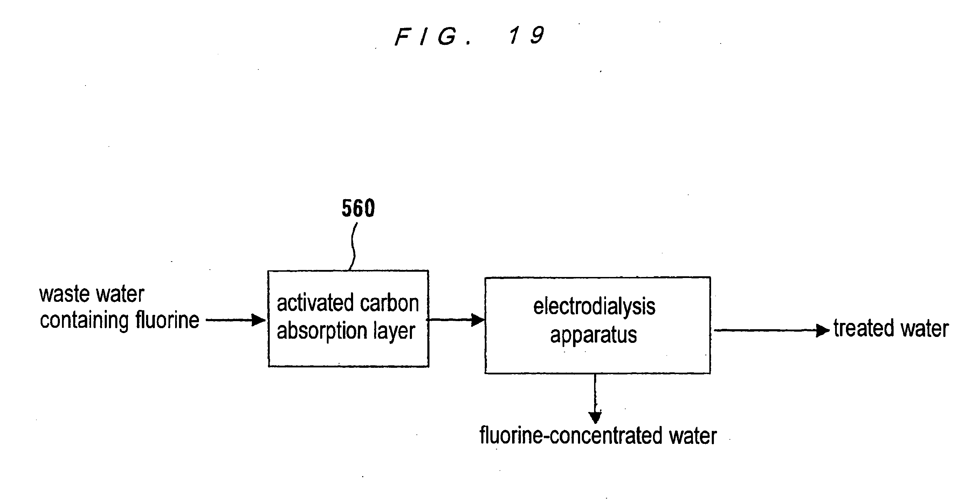

In this case also, as shown in FIG. 19, it is preferable to use a fluorine treatment system in which the waste water containing fluorine is introduced into the electrodialysis apparatus via an organic substance separation device, such as an activated carbon absorption layer 560. Instead of the activated carbon absorption layer, a known organic substance separation device, such as a membrane separation device, can be used as the organic substance separation device. In addition, a known organic substance decomposition device can also be used.

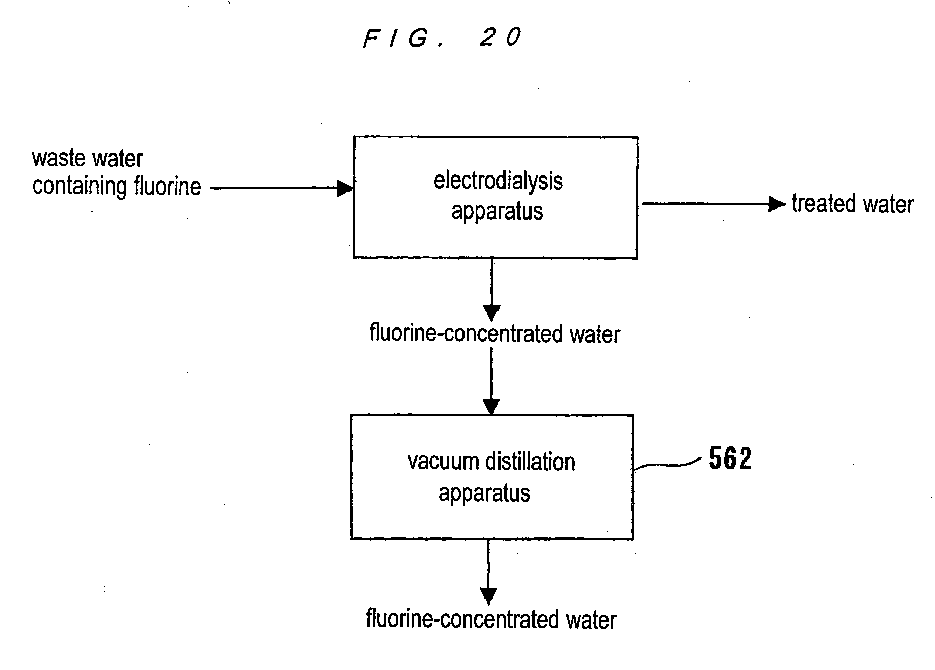

As shown in FIG. 20, it is possible to use a water evaporator, such as a vacuum distillation apparatus 562, so as to further increase the concentration of fluorine in the fluorine-concentrated water obtained from the electrodialysis apparatus according to the present invention. With this structure, even if the fluorine-concentrated water has a concentration of 1000 to 10000 mg/1, the concentration of fluorine can be easily increased to more than 1 to 10%. Thus, this structure helps to increase the range of its reuse applications, e.g., acid cleaning of stainless steel in the iron and steel industry.

### <Example 1>

Using the electrodialysis apparatus shown in FIG. 1, a fluorine-concentrating test was carried out on fluorine-containing waste water (60 mg-F/L). The specifications of the electrodialysis apparatus are as follows:
- Dialysis area: 6 dm²
- Cation-exchange membrane: NEOSEPTA CMB manufactured by ASTOM Corporation
- Anion exchange membrane: NEOSEPTA AHA manufactured by ASTOM Corporation
- Cation exchange non-woven fabric: produced by graft polymerization. Polyethylene non-woven fabric was used as bases. Functional group was sulfone group.
- Anion exchange non-woven fabric: produced by graft polymerization. Polyethylene non-woven fabric was used as bases. Functional group was quaternary ammonium group.
- Cation exchange spacer: produced by graft polymerization. Polyethylene diagonal net was used as bases. Functional group was sulfone group.
- Anion exchange spacer: produced by graft polymerization. Polyethylene diagonal net was used as bases. Functional group was quaternary ammonium group.
- Anode: lath metal made of titanium plated with platinum
- Cathode: lath metal made of SUS 304

The operating conditions of the electrodialysis apparatus are as follows:
- Current density: 1 A/dm²
- Flow rate of raw water: 500 ml/min
- Amount of anode liquid supplied: 25 ml/min
- Amount of circulating cathode liquid: 25 ml/min
- Amount of circulating buffer water: 250 ml/min
- Amount of buffer water supplied to concentrated water tank: 25 ml/min
- Amount of circulating concentrated water: 250 ml/min

As a result, the fluorine concentration in the concentrating chamber was as high as 1200 mg-F/L, whereas the fluorine concentration in the buffer chamber was 5 to 10 mg-F/L, and the fluorine concentration in the anode chamber was kept at a very low value of less than 1 mg-F/L. No corrosion of the anode was observed. The fluorine concentration in the cathode chamber was also kept at a very low value of less than 1 mg-F/L. No corrosion of the cathode was observed. The voltage applied between the electrodes was about 10V.

### <Example 2>

Using each of the electrodialysis apparatuses shown in FIGS. 3 through 5, a fluorine-concentrating test was carried out on fluorine-containing waste water (60 mg-F/L). The specifications of the electrodialysis apparatuses are as follows:
- Dialysis area: 6 dm²
- Cation exchange membrane: NEOSEPTA CMB manufactured by ASTOM Corporation
- Anion exchange membrane: NEOSEPTA AHA manufactured by ASTOM Corporation
- Cation exchange non-woven fabric: produced by graft polymerization. Polyethylene non-woven fabric was used as bases. Functional group was sulfone group.
- Anion exchange non-woven fabric: produced by graft polymerization. Polyethylene non-woven fabric was used as bases. Functional group was quaternary ammonium group.
- Cation exchange spacer: produced by graft polymerization. Polyethylene diagonal net was used as bases. Functional group was sulfone group.
- Anion-exchange spacer: produced by graft polymerization. Polyethylene diagonal net was used as substrates. Functional group was quaternary ammonium group.
- Anode: lath metal made of titanium plated with platinum
- Cathode: lath metal made of SUS 304

The operating conditions of the electrodialysis apparatuses are as follows:
- Current density: 1 A/dm²
- Flow rate of raw water: 500 ml/min
- Amount of anode liquid supplied: 25 ml/min
- Amount of circulating cathode liquid: 25 ml/min
- Amount of circulating buffer water: 250 ml/min
- Amount of buffer water supplied to concentrated water tank: 25 ml/min
- Amount of circulating concentrated water: 250 ml/min

In all the electrodialysis apparatuses, the fluorine concentration in the concentrating chamber was as high as about 1200 mg-F/L, whereas the fluorine concentration in the buffer chamber was 5 to 10 mg-F/L, and the fluorine concentration in the anode chamber was kept at a very low value of less than 1 mg-F/L. The fluorine concentration in the cathode chamber was also kept at a very low value of less than 1 mg-F/L in all the electrodialysis apparatuses. No corrosion of the anode and the cathode was observed.

### <Example 3>

Using the electrodialysis apparatus shown in FIG. 9, a fluorine-concentrating test was carried out on detoxified waste water (60 mg-F/L) containing 10 mg/L of calcium ions and 3 mg/L of organic material (in terms of total organic carbon). The waste water had been subjected to detoxification by a detoxification apparatus, which detoxifies a silica-containing gas or a PFP gas by combustion, and had been a supernatant liquid in a sedimentation separation tank, with the solid component separated out as a precipitate. In this experiment, calcium ions were concentrated in the form of hydrochloride in the separate chambers (alkali concentrating chambers) from the chambers for hydrofluoric acid. The electrodialysis apparatus comprises the two sets of electrodialysis cells, with the bipolar electrode chamber provided at the boundary, held between a pair of retainer plates. As with the anode chamber, pure water is supplied to the bipolar electrode chamber, and the effluent water from the bipolar electrode chamber is used as buffer water. Part of the effluent water from the buffer chambers is mixed with the raw water. The specifications of the electrodialysis apparatus are as follows:
- Dialysis area: 6 dm²
- Cation exchange membrane: NEOSEPTA CMB manufactured by ASTOM Corporation
- Anion exchange membrane: NEOSEPTA AHA manufactured by ASTOM Corporation
- Cation exchange non-woven fabric: produced by graft polymerization. Polyethylene non-woven fabric was used as bases. Functional group was sulfone group.
- Anion exchange non-woven fabric: produced by graft polymerization. Polyethylene non-woven fabric was used as bases. Functional group was quaternary ammonium group.
- Cation exchange spacer: produced by graft polymerization. Polyethylene diagonal net was used as bases. Functional group was sulfone group.
- Anion exchange spacer: produced by graft polymerization. Polyethylene diagonal net was used as bases. Functional group was quaternary ammonium group.
- Anode: lath metal made of titanium plated with platinum
- Cathode: lath metal made of SUS 304
- Bipolar electrode: lath metal made of titanium plated with platinum
- Cartridge filter: pore diameter 5 µm
- Activated carbon: packed bed of particulate activated carbon

The operating conditions of the electrodialysis apparatus are as follows:
- Current density: 1 A/dm²
- Flow rate of raw water: 1000 ml/min
- Amount of anode liquid supplied: 25 ml/min
- Amount of bipolar electrode liquid supplied: 25 ml/min
- Amount of cathode liquid supplied: 25 ml/min
- Amount of electrode liquid supplied to buffer water tank: 50 ml/min
- Amount of circulating buffer water: 500 ml/min
- Amount of replenishing concentrated water: 50 ml/min
- Amount of circulating concentrated water: 500 ml/min

Also in the electrodialysis apparatus, the fluorine concentrations in the acid concentrating chambers were as high as about 1200 mg-F/L, whereas the fluorine concentrations in the buffer chambers were as low as 5 to 10 mg-F/L. The fluorine concentrations in the anode chamber and the bipolar electrode chamber were kept at a very low value of less than 1 mg-F/L. The fluorine concentration in the cathode chamber was also kept at a very low value of less than 1 mg-F/L. No corrosion of the anode and the bipolar electrode was observed, nor was corrosion of the cathode.

### <Example 4>

Using the electrodialysis apparatus shown in FIG. 11, a fluorine-concentrating test was carried out on fluorine-containing waste water (60 mg-F/L) containing 40 mg/L of ammonium ions. In this experiment, ammonium ions were concentrated in the separate chambers (alkali concentrating chambers) from the chambers for hydrofluoric acid. The apparatus comprises the two sets of electrodialysis cells, with the bipolar electrode chamber provided at the boundary, held between a pair of retainer plates. As with the anode chamber, pure water is supplied to the bipolar electrode chamber, and the effluent water from the bipolar electrode chamber is used as buffer water. Part of the effluent water from the buffer chambers is supplied to the acid-concentrated water tank. The specifications of the electrodialysis apparatus are as follows:
- Dialysis area: 6 dm²
- Cation exchange membrane: NEOSEPTA CMB manufactured by ASTOM Corporation
- Anion exchange membrane: NEOSEPTA AHA manufactured by ASTOM Corporation
- Cation exchange non-woven fabric: produced by graft polymerization. Polyethylene non-woven fabric was used as bases. Functional group was sulfone group.
- Anion exchange non-woven fabric: produced by graft polymerization. Polyethylene non-woven fabric was used as bases. Functional group was quaternary ammonium group.
- Cation exchange spacer: produced by graft polymerization. Polyethylene diagonal net was used as bases. Functional group was sulfone group.
- Anion exchange spacer: produced by graft polymerization. Polyethylene diagonal net was used as bases. Functional group was quaternary ammonium group.
- Anode: lath metal made of titanium plated with platinum
- Cathode: lath metal made of SUS 304
- Bipolar electrode: lath metal made of titanium plated with platinum

The operating conditions of the electrodialysis apparatus are as follows:
- Current density: 1 A/dm²
- Flow rate of raw water: 1000 ml/min
- Amount of anode liquid supplied: 25 ml/min
- Amount of bipolar electrode liquid supplied: 25 ml/min
- Amount of cathode liquid supplied: 25 ml/min
- Amount of electrode liquid supplied to buffer water tank: 50 ml/min
- Amount of circulating buffer water: 500 ml/min
- Amount of buffer water supplied to acid-concentrated water tank: 50 ml/min
- Amount of circulating acid- or alkali-concentrated water: 500 ml/min

Fluoride ions were concentrated as hydrofluoric acid in the acid concentrating chambers, and the fluorine concentrations in the acid concentrating chambers were as high as about 1200 mg-F/L, whereas the fluorine concentrations in the buffer chambers were as low as 5 to 10 mg-F/L. The fluorine concentrations in the anode chamber and the bipolar electrode chamber were kept at a very low value of less than 1 mg-F/L. The fluorine concentration in the cathode chamber was also kept at a very low value of less than 1 mg-F/L. Ammonium ions were concentrated as ammonia water in a concentration of about 1000 mg/L in the alkali concentrating chambers. It was possible to concentrate ammonium ions and fluoride ions separately. No corrosion of the anode and the bipolar electrode was observed, nor was corrosion of the cathode.

According to the present invention, fluorine-containing waste water can be electrodialyzed stably without corrosion of an electrode. Fluorine-containing waste water can be electrodialyzed in such a manner that the treated water has a low fluorine concentration of less than lmg/L and the treated water can be reused. Fluorine-containing waste water containing ammonium ions can be electrodialyzed to obtain fluorine-concentrated water from which ammonium ions have been separated. When electrodialyzing fluorine-containing waste water containing metal ions capable of forming a metal hydroxide sludge, fluorine-concentrated water from which metal ions have been separated can be obtained without the formation of a metal hydroxide sludge. Fluorine-containing waste water can be electrodialyzed to obtain fluorine-concentrated water which can be supplied to a fluorine recycling apparatus to recover fluorine as calcium fluoride (CaF₂). Furthermore, fluorine-containing waste water containing ammonium ions can be electrodialyzed to obtain fluorine-concentrated water from which ammonium ions have been separated so as to facilitate recycling of fluorine and which can be supplied to a fluorine recycling apparatus to recover fluorine as calcium fluoride (CaF₂).

By using an electrodialysis apparatus according to the present invention to treat waste water, or its pretreated effluent, from a fluorine recycling apparatus for recovering fluorine in an aqueous solution in the form of calcium fluoride (CaF₂), it becomes possible to increase the rate of recycling of fluorine, i.e., the recovery rate of calcium fluoride crystals, in the fluorine recycling apparatus. In this regard, about 10 to 20% of the amount of fluorine received by a fluorine recycling apparatus is discharged in dilute hydrofluoric acid waste water from the recycling apparatus. When the fluorine contained in the waste water is concentrated by an electrodialysis apparatus according to the present invention, the resulting fluorine-concentrated water can be used again as raw water in the fluorine recycling apparatus. It is also noted in this regard that though a fluorine recycling apparatus poorly recycles fluorine, i.e., poorly recovers calcium fluoride crystals, from dilute hydrofluoric acid waste water, the apparatus can fully achieve the fluorine recovering performance for concentrated hydrofluoric acid waste water.

### Industrial Applicability

The present invention is suitably used for an electrodialysis apparatus for treatment of liquids containing fluorine or the like.

## Claims

1. An electrodialysis apparatus comprising:
an anode chamber having an anode;
a cathode chamber having a cathode;
a desalting chamber for removing target ions from water to be treated supplied to produce treated water having a lowered concentration of the target ions;
a concentrating chamber for concentrating the target ions, which have moved from the desalting chamber, in the water to be treated to produce concentrated water having an increased concentration of the target ions;
a path for supplying pure water to the anode chamber; and
a path for supplying at least part of effluent water from the anode chamber to the concentrating chamber.

2. An electrodialysis apparatus comprising:
an anode chamber having an anode;
a cathode chamber having a cathode;
a desalting chamber for removing target ions from water to be treated supplied to produce treated water having a lowered concentration of the target ions;
a concentrating chamber for concentrating the target ions, which have moved from the desalting chamber, in the water to be treated to produce concentrated water having an increased concentration of the target ions;
a buffer chamber for blocking the target ions in the water to be treated from flowing from the concentrating chamber directly into the anode chamber;
a path for supplying pure water to the anode chamber; and
a path for supplying at least part of effluent water from the anode chamber to the concentrating chamber.

3. An electrodialysis apparatus comprising:
an anode chamber having an anode;
a cathode chamber having a cathode;
a desalting chamber for removing target ions from water to be treated supplied to produce treated water having a lowered concentration of the target ions;
a concentrating chamber for concentrating the target ions, which have moved from the desalting chamber, in the water to be treated to produce concentrated water having an increased concentration of the target ions;
a buffer chamber for blocking the target ions in the water to be treated from flowing from the concentrating chamber directly into the anode chamber;
a path for supplying pure water to the anode chamber; and
a path for supplying at least part of effluent water from the anode chamber to the buffer chamber.

4. An electrodialysis apparatus comprising:
an anode chamber having an anode;
a cathode chamber having a cathode;
a desalting chamber for removing target ions from water to be treated supplied to produce treated water having a lowered concentration of the target ions;
a concentrating chamber for concentrating the target ions, which have moved from the desalting chamber, in the water to be treated to produce concentrated water having an increased concentration of the target ions;
a buffer chamber for blocking the target ions in the water to be treated from flowing from the concentrating chamber directly into the anode chamber;
a path for supplying pure water to the anode chamber; and
a path for supplying at least part of effluent water from the anode chamber to the concentrating chamber via the buffer chamber.

5. An electrodialysis apparatus comprising:
an anode chamber having an anode;
a cathode chamber having a cathode;
a desalting chamber for removing first target ions and second target ions from water to be treated supplied to produce treated water having a lowered concentration of the first target ions and a lowered concentration of the second target ions;
a first concentrating chamber for concentrating the first target ions, which have moved from the desalting chamber, in the water to be treated to produce first concentrated water having an increased concentration of the first target ions;
a second concentrating chamber for concentrating the second target ions, which have moved from the desalting chamber, in the water to be treated to produce second concentrated water having an increased concentration of the second target ions;
an ion supply chamber for supplying ions, having the opposite polarity to that of the second target ions in the water to be treated, to the second concentrating chamber;
a path for supplying pure water to the anode chamber; and
a path for supplying at least part of effluent water from the anode chamber to the first concentrating chamber.

6. An electrodialysis apparatus comprising:
an anode chamber having an anode;
a cathode chamber having a cathode;
a desalting chamber for removing first target ions and second target ions from water to be treated supplied to produce treated water having a lowered concentration of the first target ions and a lowered concentration of the second target ions;
a first concentrating chamber for concentrating the first target ions, which have moved from the desalting chamber, in the water to be treated to produce first concentrated water having an increased concentration of the first target ions;
a buffer chamber for blocking the first target ions in the water to be treated from flowing from the first concentrating chamber directly into the anode chamber;
a second concentrating chamber for concentrating the second target ions, which have moved from the desalting chamber, in the water to be treated to produce second concentrated water having an increased concentration of the second target ions;
an ion supply chamber for supplying ions, having the opposite polarity to that of the second target ions in the water to be treated, to the second concentrating chamber;
a path for supplying pure water to the anode chamber; and
a path for supplying at least part of effluent water from the anode chamber to the buffer chamber.

7. An electrodialysis apparatus comprising:
an anode chamber having an anode;
a cathode chamber having a cathode;
a desalting chamber for removing first target ions and second target ions from water to be treated supplied to produce treated water having a lowered concentration of the first target ions and a lowered concentration of the second target ions;
a first concentrating chamber for concentrating the first target ions, which have moved from the desalting chamber, in the water to be treated to produce first concentrated water having an increased concentration of the first target ions;
a buffer chamber for blocking the first target ions in the water to be treated from flowing from the first concentrating chamber directly into the anode chamber;
a second concentrating chamber for concentrating the second target ions, which have moved from the desalting chamber, in the water to be treated to produce second concentrated water having an increased concentration of the second target ions;
an ion supply chamber for supplying ions, having the opposite polarity to that of the second target ions in the water to be treated, to the second concentrating chamber;
a path for supplying pure water to the anode chamber; and
a path for supplying at least part of effluent water from the anode chamber to the first concentrating chamber.

8. An electrodialysis apparatus comprising:
an anode chamber having an anode;
a cathode chamber having a cathode;
a desalting chamber for removing first target ions and second target ions from water to be treated supplied to produce treated water having a lowered concentration of the first target ions and a lowered concentration of the second target ions;
a first concentrating chamber for concentrating the first target ions, which have moved from the desalting chamber, in the water to be treated to produce first concentrated water having an increased concentration of the first target ions;
a buffer chamber for blocking the first target ions in the water to be treated from flowing from the first concentrating chamber directly into the anode chamber;
a second concentrating chamber for concentrating the second target ions, which have moved from the desalting chamber, in the water to be treated to produce second concentrated water having an increased concentration of the second target ions;
an ion supply chamber for supplying ions, having the opposite polarity to that of the second target ions in the water to be treated, to the second concentrating chamber;
a path for supplying pure water to the anode chamber; and
a path for supplying at least part of effluent water from the anode chamber to the first concentrating chamber via the buffer chamber.

9. An electrodialysis apparatus comprising:
an anode chamber having an anode;
a cathode chamber having a cathode;
a desalting chamber for removing first target ions and second target ions from water to be treated supplied to produce treated water having a lowered concentration of the first target ions and a lowered concentration of the second target ions;
a first concentrating chamber for concentrating the first target ions, which have moved from the desalting chamber, in the water to be treated to produce first concentrated water having an increased concentration of the first target ions;
a second concentrating chamber for concentrating the second target ions, which have moved from the desalting chamber, in the water to be treated to produce second concentrated water having an increased concentration of the second target ions;
a path for supplying pure water to the anode chamber; and
a path for supplying at least part of effluent water from the anode chamber to the first concentrating chamber.

10. An electrodialysis apparatus comprising:
an anode chamber having an anode;
a cathode chamber having a cathode;
a desalting chamber for removing first target ions and second target ions from water to be treated supplied to produce treated water having a lowered concentration of the first target ions and a lowered concentration of the second target ions;
a first concentrating chamber for concentrating the first target ions, which have moved from the desalting chamber, in the water to be treated to produce first concentrated water having an increased concentration of the first target ions;
a buffer chamber for blocking the first target ions in the water to be treated from flowing from the first concentrating chamber directly into the anode chamber;
a second concentrating chamber for concentrating the second target ions, which have moved from the desalting chamber, in the water to be treated to produce second concentrated water having an increased concentration of the second target ions;
a path for supplying pure water to the anode chamber; and
a path for supplying at least part of effluent water from the anode chamber to the buffer chamber.

11. An electrodialysis apparatus comprising:
an anode chamber having an anode;
a cathode chamber having a cathode;
a desalting chamber for removing first target ions and second target ions from water to be treated supplied to produce treated water having a lowered concentration of the first target ions and a lowered concentration of the second target ions;
a first concentrating chamber for concentrating the first target ions, which have moved from the desalting chamber, in the water to be treated to produce first concentrated water having an increased concentration of the first target ions;
a buffer chamber for blocking the first target ions in the water to be treated from flowing from the first concentrating chamber directly into the anode chamber;
a second concentrating chamber for concentrating the second target ions, which have moved from the desalting chamber, in the water to be treated to produce second concentrated water having an increased concentration of the second target ions;
a path for supplying pure water to the anode chamber; and
a path for supplying at least part of effluent water from the anode chamber to the first concentrating chamber.

12. An electrodialysis apparatus comprising:
an anode chamber having an anode;
a cathode chamber having a cathode;
a desalting chamber for removing first target ions and second target ions from water to be treated supplied to produce treated water having a lowered concentration of the first target ions and a lowered concentration of the second target ions;
a first concentrating chamber for concentrating the first target ions, which have moved from the desalting chamber, in the water to be treated to produce first concentrated water having an increased concentration of the first target ions;
a buffer chamber for blocking the first target ions in the water to be treated from flowing from the first concentrating chamber directly into the anode chamber;
a second concentrating chamber for concentrating the second target ions, which have moved from the desalting chamber, in the water to be treated to produce second concentrated water having an increased concentration of the second target ions;
a path for supplying pure water to the anode chamber; and
a path for supplying at least part of effluent water from the anode chamber to the first concentrating chamber via the buffer chamber.

13. An electrodialysis apparatus comprising:
an anode chamber having an anode;
a cathode chamber having a cathode;
a desalting chamber for removing target ions from water to be treated supplied to produce treated water having a lowered concentration of the target ions;
a concentrating chamber for concentrating the target ions, which have moved from the desalting chamber, in the water to be treated to produce concentrated water having an increased concentration of the target ions;
a buffer chamber for blocking the target ions in the water to be treated from flowing from the concentrating chamber directly into the anode chamber;
a path for supplying pure water to the buffer chamber; and
a path for supplying at least part of effluent water from the buffer chamber to the concentrating chamber.

14. An electrodialysis apparatus comprising:
an anode chamber having an anode;
a cathode chamber having a cathode;
a desalting chamber for removing first target ions and second target ions from water to be treated supplied to produce treated water having a lowered concentration of the first target ions and a lowered concentration of the second target ions;
a first concentrating chamber for concentrating the first target ions, which have moved from the desalting chamber, in the water to be treated to produce first concentrated water having an increased concentration of the first target ions;
a buffer chamber for blocking the first target ions in the water to be treated from flowing from the first concentrating chamber directly into the anode chamber;
a second concentrating chamber for concentrating the second target ions, which have moved from the desalting chamber, in the water to be treated to produce second concentrated water having an increased concentration of the second target ions;
a first cation exchange membrane provided between the anode chamber and the buffer chamber;
a first anion exchange membrane provided between the cathode chamber and the second concentrating chamber;
a second cation exchange membrane provided between the buffer chamber and the first concentrating chamber;
a second anion exchange membrane provided between the first concentrating chamber and the desalting chamber; and
a third cation exchange membrane provided between the desalting chamber and the second concentrating chamber.

15. An electrodialysis apparatus comprising:
an anode chamber having an anode;
a cathode chamber having a cathode;
a desalting chamber for removing first target ions and second target ions from water to be treated supplied to produce treated water having a lowered concentration of the first target ions and a lowered concentration of the second target ions;
a first concentrating chamber for concentrating the first target ions, which have moved from the desalting chamber, in the water to be treated to produce first concentrated water having an increased concentration of the first target ions;
a buffer chamber for blocking the first target ions in the water to be treated from flowing from the first concentrating chamber directly into the anode chamber;
a second concentrating chamber for concentrating the second target ions, which have moved from the desalting chamber, in the water to be treated to produce second concentrated water having an increased concentration of the second target ions;
an ion supply chamber for supplying ions, having the opposite polarity to that of the second target ions in the water to be treated, to the second concentrating chamber;
a first cation exchange membrane provided between the anode chamber and the buffer chamber;
a first anion exchange membrane provided between the cathode chamber and the ion supply chamber;
a second cation exchange membrane provided between the buffer chamber and the first concentrating chamber;
a second anion exchange membrane provided between the first concentrating chamber and the desalting chamber;
a third cation exchange membrane provided between the desalting chamber and the second concentrating chamber; and
a third anion exchange membrane provided between the second concentrating chamber and the ion supply chamber.

16. An electrodialysis apparatus comprising:
an anode chamber having an anode;
a cathode chamber having a cathode;
a plurality of chamber structures each comprised of a plurality of chambers;
at least one bipolar electrode chamber disposed between the chamber structures and filled with an ion exchanger;
a first cation exchange membrane provided between the anode chamber and the chamber structures;
a first anion exchange membrane provided between the cathode chamber and the chamber structures;
a second anion exchange membrane provided on the anode side of the bipolar electrode chamber; and
a second cation exchange membrane provided on the cathode side of the bipolar electrode chamber;
wherein the chamber structures each includes:
a desalting chamber for removing first target ions and second target ions from water to be treated supplied to produce treated water having a lowered concentration of the first target ions and a lowered concentration of the second target ions;
a first concentrating chamber for concentrating the first target ions, which have moved from the desalting chamber, in the water to be treated to produce first concentrated water having an increased concentration of the first target ions;
a buffer chamber for blocking the first target ions in the water to be treated from flowing from the first concentrating chamber directly into the anode chamber;
a second concentrating chamber for concentrating the second target ions, which have moved from the desalting chamber, in the water to be treated to produce second concentrated water having an increased concentration of the second target ions;
an ion supply chamber for supplying ions, having the opposite polarity to that of the second target ions in the water to be treated, to the second concentrating chamber;
a path for supplying pure water to the anode chamber and the bipolar electrode chamber;
a third cation exchange membrane provided between the buffer chamber and the first concentrating chamber;
a third anion exchange membrane provided between the first concentrating chamber and the desalting chamber;
a fourth cation exchange membrane provided between the desalting chamber and the second concentrating chamber; and
a fourth anion exchange membrane provided between the second concentrating chamber and the ion supply chamber.

17. The electrodialysis apparatus according to any one of claims 1 to 13 further comprising:
a path for mixing at least part of the effluent water from the anode chamber or the buffer chamber with the water to be treated or the treated water.

18. The electrodialysis apparatus according to any one of claims 1 to 16, wherein the water to be treated is fluorine-containing waste water.

19. The electrodialysis apparatus according to claim 18, wherein an amount of pure water supplied to the anode chamber and/or the bipolar electrode chamber is adjusted so that the fluorine concentration of the effluent water from the anode chamber and/or the bipolar electrode chamber becomes not more than 1 mg-F/L.

20. The electrodialysis apparatus according to any one of claims 1 to 16, wherein at least one of the anode chamber, the cathode chamber and the bipolar electrode chamber is filled with an ion exchanger.

21. The electrodialysis apparatus according to any one of claims 1 to 16, wherein each chamber is filled with a cation exchange fibrous material in contact with the cation exchange membrane, or an anion exchange fibrous material in contact with the anion exchange membrane.

22. The electrodialysis apparatus according to any one of claims 1 to 16, wherein, instead of pure water, the treated water of the electrodialysis apparatus is supplied to the anode chamber, the cathode chamber, the bipolar electrode chamber or the buffer chamber.

23. A waste water treatment method comprising:
treating waste water at least containing ammonium ions and fluorine by using an electrodialysis apparatus to remove ammonium ions and fluorine from the waste water, thereby producing treated water having a lowered ammonium ion concentration and a lowered fluorine concentration, and producing first concentrated water having an increased fluorine concentration and second concentrated water having an increased ammonium ion concentration.

24. A waste water treatment method comprising:
treating waste water at least containing metal ions, capable of forming a metal hydroxide sludge, and fluorine by using an electrodialysis apparatus to remove the metal ions and fluorine from the waste water, thereby producing treated water having a lowered metal ion concentration and a lowered fluorine concentration, and producing first concentrated water having an increased fluorine concentration and second concentrated water having an increased metal ion concentration.

25. The waste water treatment method according to claim 23 or 24, wherein waste water at least containing hydrogen peroxide and fluorine is subjected to hydrogen peroxide decomposition treatment, and the resulting waste water is supplied to the electrodialysis apparatus.

26. The waste water treatment method according to claim 23 or 24, wherein the fluorine concentration of the waste water is more than 1 mg/L and not more than 10,000 mg/L.

27. The waste water treatment method according to claim 23 or 24, wherein the fluorine concentration of the treated water is less than 1 mg/L.

28. The waste water treatment method according to claim 23 or 24, wherein at least part of the first concentrated water is supplied to a fluorine recycling apparatus to recover fluorine in the waste water as calcium fluoride (CaF₂).

29. A fluorine treatment system comprising:
the electrodialysis apparatus according to any one of claims 1 to 12 for treating waste water at least containing fluorine; and
a fluorine recycling apparatus for recovering fluorine-concentrated water from the electrodialysis apparatus as calcium fluoride.

30. A fluorine treatment system comprising:
the electrodialysis apparatus according to any one of claims 1 to 12 for treating waste water at least containing fluorine; and
a coagulation-sedimentation apparatus for carrying out a coagulation-sedimentation treatment of water comprising at least part of fluorine-concentrated water from the electrodialysis apparatus.

31. A water recycling system comprising:
the electrodialysis apparatus according to any one of claims 1 to 12; and
a pure water production apparatus for producing pure water using treated water from the electrodialysis apparatus as raw water.

32. A water recycling system comprising:
the electrodialysis apparatus according to any one of claims 1 to 12;
a detoxification apparatus;
a path for supplying effluent water from the detoxification apparatus to the electrodialysis apparatus; and
a path for supplying part of treated water from the electrodialysis apparatus to the detoxification apparatus.

33. A fluorine treatment system comprising:
the electrodialysis apparatus according to any one of claims 1 to 12;
a solid-liquid separation device for carrying out solid-liquid separation of waste water at least containing fluorine; and
a path for supplying the waste water, after the solid-liquid separation with the solid-liquid separation device, to the electrodialysis apparatus.

34. A fluorine treatment system comprising:
the electrodialysis apparatus according to any one of claims 1 to 12;
an organic matter separation device for carrying out organic matter separation of waste water at least containing fluorine; and
a path for supplying the waste water, after the organic matter separation with the organic matter separation device, to the electrodialysis apparatus.
